(19) Europäisches Patentamt
European Patent Office
Office européen des brevets

(11) EP 1 870 704 A1

(12) # EUROPEAN PATENT APPLICATION
published in accordance with Art. 153(4) EPC

(43) Date of publication:
**26.12.2007 Bulletin 2007/52**

(21) Application number: **06714524.3**

(22) Date of filing: **24.02.2006**

(51) Int Cl.:
***G01N 27/447*** *(2006.01)*

(86) International application number:
**PCT/JP2006/303385**

(87) International publication number:
**WO 2006/090821 (31.08.2006 Gazette 2006/35)**

(84) Designated Contracting States:
**DE FR GB NL**

(30) Priority: **25.02.2005 JP 2005052058**

(71) Applicants:
- **Japan Science and Technology Agency
Kawaguchi-shi,
Saitama 332-0012 (JP)**
- **National Institute of Advanced Industrial Science and Technology
Tokyo 100-8921 (JP)**

(72) Inventors:
- **MASUDA, Mitsutoshi
c/o N. I. of Adv.Ind.Sc.and Te.,
Tsukuba-shi Ibaraki 3058565 JAPAN (JP)**
- **MATSUMOTO, Kazuko
hkubo, Shinjuku-ku, Tokyo, 1698555 (JP)**
- **IWAURA, Rika
c/o National Institute of Advanced
5, 1-1, Higashi 1-chome, (JP)**
- **YAMAGUCHI, Yoshinori
hkubo, Shinjuku-ku, Tokyo, 1698555 (JP)**
- **SHIMIZU, Toshimi
c/o National Institute of Advance
Central 5, 1-1, Higashi 1-chome (JP)**

(74) Representative: **Albrecht, Thomas et al
Kraus & Weisert
Patent- und Rechtsanwälte
Thomas-Wimmer-Ring 15
80539 München (DE)**

(54) **SEPARATION MEDIUM FOR BIOCHEMICAL ANALYSIS**

(57) The invention provides a novel packing composition for separation and/or analysis which permits easy capillary replacement; a process for the production of the packing composition; a method for filling a capillary with the packing composition; and electrophoretic methods (such as capillary electrophoresis) with the same. The invention relates to a packing composition for electrophoretic separation and/or analysis which contains a long self-assembly produced by dissolving a low-molecular-weight amphiphilic compound having a hydrophobic moiety and a hydrophilic moiety in water under heating and then cooling the resulting solution; a process for the production of the packing composition; a method of separation and/or analysis with the composition; and so on.

EP 1 870 704 A1

**Description**

Technical Field

The present invention relates to a separation medium which is used in electrophoresis apparatus for biochemical analysis and the like, a capillary column packed with the separation medium, and a separation system using the separation medium. More particularly, the present invention relates to a packing composition for electrophoretic separation and/or analysis which contains long self-assemblies produced by dissolving a amphiphilic compound having a hydrophobic moiety and a hydrophilic moiety in water under heating and then cooling the resulting solution; a process for the production of the packing composition; a method of separation and/or analysis with the composition; and so on.

Background Art

To clarify a biological function at the cellular level, analyses and assays of proteins, peptides, nucleic acids, amino acids, saccharides, neurotransmitters and the like in the living body are performed. As a means thereof, high performance liquid chromatography combined with mass spectrometry or the like has been performed, but its theoretical plate number does not reach that of capillary electrophoresis. Specifically, for example, as shown from the separation and/or analysis of oligonucleotides in "J. Chromatography", Vol. 558, pp.280 (1991), the plate number is 1,000,000 in capillary electrophoresis, while the number is about 30,000 in high performance liquid chromatography. Furthermore, since the absolute amount of sample required in the analysis is a trace amount as compared to high performance chromatography (the amount is a few ml in high performance liquid chromatography, while the amount is at the level of pl in capillary electrophoresis), capillary electrophoresis is used for the separation and/or analysis. Also, from the fact that capillary electrophoresis is used in the Human Genome Project, it has a reputation for high resolution, and recently capillary electrophoresis is also used extensively in the analysis of proteins, amino acids and the like. In this way, capillary electrophoresis which is convenient and has high resolution and high sensitivity is an important technology for the separation and/or analysis of DNA, RNA, proteins and the like. With regard to the conventional capillary electrophoresis, separation is performed using polymer, as a sieve, filled in the capillary which possesses an internal diameter of 20 to 100 μm (see Non-Patent Document 1). The operation is an effect of a physical "separation medium," and in many cases separation is performed by packing the inside of a capillary with a water-soluble polymer. This separation medium can be classified into an fixed type where the medium is fixed in the inside and is difficult to be replaced, and a replaceable type where the medium is a solution which simply fills the capillary and is easy to be replaced. In either case, a water-soluble polymer is used as the representative sieve.

A representative example of the fixed type separation medium is polyacrylamide. Specifically, a methacrylic monomer which is one of silane coupling agents binding to glass surface (3-methacryloxypropyltrimethoxysilane: MPTS) and an acrylamide monomer, and a small amount of bisacrylamide monomer for crosslinking purpose are mixed in a capillary, and then are subjected to radical polymerization. In this way, a solid phase type separation medium formed of a reticulate gel (polymer network) is obtained. A disadvantage of this system is that the life span of the capillary is short because the resolution of the separation medium is decreased owing to adsorption of samples, impurities and the like. Thus, it is usually necessary to replace the whole capillary after a use of 20 to 100 times. Also, there can be mentioned that since the operation of polymer immobilization of these separation media involves polymerization inside the capillary, much time and steps are required for the preparation of a capillary; that the resulting gel partially includes non-uniform network structures which lead to a decrease in the resolution; and that the quantitative property is lowered because of the replacement of capillaries. Although these fixed type separation media (gel packed capillaries) are commercially available, it is difficult to select a separation medium which is optimized in accordance with the respective molecular weights, and in practice, it is required to adjust the gel concentration and the like in accordance with the size or type of the sample.

Examples of the replaceable type separation medium are hydroxyethylcellulose (HEC), hydroxypropylcellulose (HPC), or non-crosslinked linear-chain polyacrylamide (see Non-Patent Document 2). Advantages of these separation media are that repacking is easy because these separation media are polymer solutions; that the life span of the capillary is dramatically improved; and that the reproducibility in the analysis is high because of the long life span. Furthermore, since repacking of the medium is easy, automatic packing of the separation medium is possible, and it is highly possible to contribute to full automation, labor saving and speeding-up of the analysis. Disadvantage is that the concentration, molecular weight and the like of the separation medium need to be optimized depending on the length (molecular weight) of the sample (DNA, RNA, proteins) to be separated. That is, for a sample of high molecular weight, a polymer solution (sieve) having high viscosity and high concentration is required, therefore, packing of a polymer or a sample becomes difficult. Furthermore, because the mobility of the sample is decreased, analysis requires a long time. In other words, in the case of taking double-stranded DNA as a sample, when a polymer solution which is a replaceable type separation medium is used, the limit of the separation and/or analysis by capillary electrophoresis is about 10,000 base pairs.

In order to make use of such advantages of the replaceable type separation media, and also to suppress increases in the viscosity of separation medium solutions at high concentrations, there has been attempts to produce new separation media having nanostructures. They are characterized by having structures and sizes that are different from those of flexible, random, one-dimensional linear-chain polymers which have been used heretofore as a separation medium. For example, a separation medium which is easily replaceable because it is dispersible in a solvent, while having a network structure in a micronized gel state by reducing crosslinking points in the polymer gel which serves as the separation medium (see Non-Patent Document 3), an example which has been successful in lowering the solution viscosity of the separation medium by modifying the surface of spherical gold nanoparticles with a polymer (se Non-Patent Document 4), an example of using an replaceable type organic gel which can be replaced by heating while maintaining the gel state (see Non-Patent Document 5), and the like may be mentioned. However, since the microstructure of the gel is limited to a flexible and random structure or to a spherical structure in the Non-Patent Documents 3 and 4, respectively, and since an organic solvent is used in the formation of gel in the Non-Patent Document 5, molecules that are insoluble in organic solvents cannot be analyzed or detected, and in the case of samples such as DNA, RNA, proteins having higher-dimensional structures, there is a possibility that the samples are denatured by the organic solvent.

Meanwhile, it has already been known that an amphiphilic compound having a hydrophilic moiety and a hydrophobic moiety aggregates by itself by dissolving in water under heating and then cooling, or by simply dispersing in water (referred to as self-assembly), thus to form stable nanometer-sized molecular assemblies (see Non-Patent Document 6). With regard to such molecular assemblies formed by self-assembly of molecules, there are traditionally known spherical micelles formed by alkylbenzenesulfonic acid (SDS: Sodium Dodecyl Sulfate) and the like, or spherical molecular assemblies formed by naturally occurring phospholipids (a basic structure of cellular membrane consisting of a bilayer membrane, which is referred to as liposome or vesicle). A feature of the assemblies formed from such amphiphilic compounds is that the molecules are in a liquid crystalline state at room temperature, thus having fluidity. Therefore, the molecules usually have the most stable spherical aggregated form, and easily transformed by external stimuli. Such structure in the liquid crystalline state can be changed to a solid state having no fluidity by cooling, but usually the structure turns into a solid state while maintaining the condition reflecting the spherical structure in the liquid crystalline state. The temperature at which such an amphiphilic compound undergoes a change from a fluid state to a solid state is called the gel-liquid crystal phase transition temperature.

When a functional group which is likely to increase the intermolecular binding force and the spatial directionality (referred to as anisotropy) is introduced into such an amphiphilic compound, the structural form in the solid state undergoes from the spherical form to the unique forms that will be described below. Here, examples of the functional group imparting the intermolecular interaction and anisotropy as described above include an amide group, a hydroxyl group, an urea group, an imide group, a urethane group, a carboxyl group, a phosphate group, which are capable of forming hydrogen bonding, and an aromatic ring, a fluorocarbon group and the like, which are rigid units. In particular, introduction of sugars and amino acids having these functional groups is effective. Also, to stabilize these unique forms, amphiphilic compounds having relatively long and large hydrophobic moieties are favorably used. The self-assembled form of such amphiphilic compound having increased intermolecular binding force in water have increased fluidity when heated (that is, above the gel-liquid crystal transition temperature), and becomes spherical in the same manner as shown by conventional amphiphilic compounds. However, when the compound is allowed to undergo phase transition to a solid state by cooling to the gel-liquid crystalline phase transition temperature or less, the assembled structure changes, resulting in a long-shaped structure having a microstructure such as an ultramicrofiber having a high aspect ratio with a width of 3 nm to 500 μm and a length of 100 nm to a few mm, a tape, and helical-shaped tapes transformed by twisting the fiber and tape, or a tube having an external diameter of 20 nm to a few ten μm and a length of 100 nm to a few mm, or the like (see Non-Patent Documents 7 and 8). Also, when the concentration of the compound is increased or a metal salt is added, these structures come into physical contact (crosslinked) with each other, thereby being entangled, and thus a hydrogel containing plenty of water which is the solvent is formed.

The features of these long-shaped structures formed by self assembly or of the hydrogels formed from such structures are that: (1) it is possible for the structures to reversibly return to the amphiphilic compound which is the starting material, and (2) in the case of forming a long-shaped structure by self-assembly, it is possible to precisely control the minute shape or size by means of the conditions. Specifically, these structures are generally stable in the dispersing solvent, but when a physical vibration or impact is applied or a solvent which dissolves the amphiphilic compound well (good solvent) is added, such unique structures disintegrate, and return to the spherical molecular aggregate or to the molecularly dispersed state. However, when such disintegrated structures can be allowed to reversibly self-assemble by recooling, adding a poor solvent such as water, or leaving to stand without vibration, and be semipermanently returned to the original long-shaped structures or to the physical crosslinking product thereof, that is, hydrogel. Furthermore, in this case, it is also possible to manipulate the minute forms (fibrous, tape-shaped, helical tape-shaped, tube-shaped, or the like), macroforms such as sol-gel and the like (sol-like dispersion in which long structures are dispersed, hydrogels formed by physical contact of such structures), the size of the respective microstructures and the like, by means of the type of molecule, cooling rate or concentration of the amphiphilic compound, as well as solution

pH, addition of inorganic salts or organic solvents other than water, or the like.

For the examples of using such amphiphilic compounds in electrophoretic analysis, an SDS-PAGE (sodium dodecyl sulfate-polyacrylamide gel electrophoresis) method, an SDS (sodium dodecyl sulfate) capillary electrophoresis method, a micellar electrokinetic chromatography method, and the like have been conventionally used. However, in the SDS-PAGE method or the SDS capillary electrophoresis method, SDS (sodium dodecyl sulfate) is used as the amphiphilic compound. The role of SDS in these methods is such that when the micelles of SDS adsorb onto proteins, the micelles destroy the higher dimensional structure of the proteins, thus to denature the proteins to single polymer chains. Therefore, these methods do not use the amphiphilic compounds as the medium for separation or analysis, contrary to the present invention. Also, in the micellar electrokinetic chromatography method, micelles merely serve as a mobile phase having a hydrophobic field (Non-Patent document 1).

Non-Patent Document 1: Susumu Honda and Shigeru Terabe, eds., "Capillary Electrophoresis, Fundamentals and Practice", Kodansha Scientific (1995).
Non-Patent Document 2: A. Lagu et al. Anal. Chem., 1991, 63, 1233.
Non-Patent Document 3: A.E. Barron et al. Anal. Chem., 2004, 76, 5249.
Non-Patent Document 4: H.-T. Chang et al., Anal. Chem., 2004, 76, 192.
Non-Patent Document 5: O. Lev et al. Anal. Chem., 2004, 76, 5399.
Non-Patent Document 6: Shoshichi Nojima, Junzo Sunamoto and Keizo Inoue, eds., "Liposome", Nankodou (1988).
Non-Patent Document 7: L.A. Estroff and A.D. Hamilton, Chem. Rev. 2004, 104, 1201.
Non-Patent Document 8: Kazuyuki Hirao ed., "Nanotechnology: Learning from the Basics", Tokyo Kagaku Dozin Co., Ltd., Chapter 5 (2003).

Disclosure of the Invention

Problems to be Solved by the Invention

As an example of using such nanostructure formed by self-assembly, the example of a self-assembled organic gel described in the Non-Patent Document 5 may be mentioned. However, this is an organogel which self-assembles to result in a gel only in an organic solvent such as acetonitrile or a mixed solvent of acetonitrile and methanol. That is to say, electrophoretic analysis should be limitedly performed in an organic solvent system. Many biopolymer samples are insoluble in such organic solvents. Furthermore, no description is given as to whether replacement of the separation medium is possible. Therefore, the present invention provides a packing composition for separation and/or analysis as a novel separation medium for electrophoresis, and an electrophoresis method using the composition. More particularly, the invention provides a packing composition for separation and/or analysis as a novel separation medium which permits easy capillary replacement in capillary electrophoresis, and a method of preparing the composition and a method of packing a capillary with the composition, and an electrophoresis method such as a capillary electrophoresis method using the composition.

Means for Solving the problems

The inventors of the present invention have devotedly investigated, and as a result, found that extremely sharp separation and/or analysis can be carried out by: (1) obtaining an aqueous solution of a low molecular weight amphiphilic compound having a hydrophilic moiety and a hydrophobic moiety under heating, which compound is able to self-assembly in water, and packing a separatory column of an electrophoretic analysis instrument, (2) cooling the packed column to form self-assemblies having a long-shaped structure, which serve as the separation medium for electrophoresis, or a hydrogel formed therefrom, and (3) performing an electrophoretic analysis method using the self-assemblies or the hydrogel as the separation medium. Furthermore, the present inventors found that in the case where replacement is needed owing to clogging, deterioration or the like, by redissolving the long-shaped structure under heating, discharging the structure, and then repeating the treatment of (1) there can be provided a new medium for separation and/or analysis, which allows repacking of the separation medium. Such repacking is important from the aspects of deterioration of the separation medium, as well as the selection of an appropriate separation medium in accordance with the sample to be analyzed. In particular, the repacking highly facilitates replacement of the separation medium in a capillary during capillary electrophoresis.

Therefore, the present invention relates to a packing composition for electrophoretic separation and/or analysis, the composition comprising long-shaped self-assemblies which can be prepared by dissolving a low molecular weight amphiphilic compound having a hydrophobic moiety and a hydrophilic moiety in water under heating and cooling the resulting solution.

The present invention also relates to a method of preparing a packing composition for electrophoretic separation and/or analysis containing long-shaped self-assemblies, the method including mixing a low molecular weight amphiphilic compound having a hydrophobic moiety and a hydrophilic moiety with water, dissolving the mixture in water under heating, and then cooling the resulting solution.
Furthermore, the present invention also relates to a vessel for a separation medium for electrophoresis, packed with the packing composition for electrophoretic separation and/or analysis of the present invention, preferably a capillary, and to an electrophoresis apparatus having the vessel for the separation medium, preferably a capillary.
The present invention also relates to a method of separation and/or analysis of a sample by electrophoresis using the vessel for the separation medium for electrophoresis, packed with the packing composition for electrophoretic separation and/or analysis of the present invention, preferably a capillary.
Also, the present invention relates to method of replacement of a packing composition for separation and/or analysis in a capillary column during capillary electrophoresis, the method including heating a capillary column with its capillary packed with a deteriorated packing composition for separation and/or analysis, redissolving the packing composition for separation and/or analysis to a state of fluid sol or a molecularly dispersed state, removing the dissolved deteriorated packing composition for separation and/or analysis in the capillary column by suctioning or pressurizing, and then packing the capillary column with a new packing composition for separation and/or analysis.
The present invention is further characterized by the following items 1 to 5.

1. Long-shaped self-assemblies to be used as a separation medium for electrophoretic analysis, for example, capillary electrophoresis or slab gel electrophoresis, and a method of preparing the same. In particular, long-shaped self-assemblies obtained by dissolving a low molecular weight amphiphilic compound having a hydrophobic moiety and a hydrophilic moiety in water under heating, and then cooling the resulting solution.
2. A hydrogel-like structure for a separation medium for electrophoretic analysis, based on the crosslinked structure of the long-shaped self-assemblies of the item 1 above, and a method of preparing the same.
3. A packing material comprising the long-shaped self-assemblies of the item 2 above, or the hydrogel-like separation medium formed from the self-assemblies, and a method of replacement of the same.
4. Upon deterioration of the separation medium, first the capillary is heated again to redissolve the hydrogel to a molecularly dispersed state. Then, the solution in the capillary is rapidly replaced with a new solution of separation medium by suctioning or pressurizing with a pump or the like. Eventually, the capillary is packed with a new separation medium by cooling. Such method of replacement of a separation medium.
5. A method of analysis characterized in introducing proteins, nucleic acids, lipids or the like to a capillary mounted with the separation medium of the items 1 to 4, and then performing electrophoresis.

The present invention is to provide a use of long-shaped self-assemblies obtained by dissolving a low molecular weight amphiphilic compound having a hydrophobic moiety and a hydrophilic moiety in water under heating and cooling the resultant solution, for the use as a separation medium for electrophoresis, and a method of preparing the self-assemblies.
That is, the amphiphilic compound used in the present invention is to form a network-shaped medium by means of a microstructure such as ultramicrofiber with high aspect ratio, tape, helical-shaped tape, tube structure or the like, which is obtained by self-assembly of the compound, thus to accomplish the role as a sieve, and this is an essential difference with conventional SDS or the like.
The packing composition for electrophoretic separation and/or analysis of the present invention comprises long-shaped self-assemblies obtained by a low molecular weight amphiphilic compound having a hydrophobic moiety and a hydrophilic moiety, and a carrier for packing material for separation and/or analysis.
According to the present invention, the electrophoresis method is not particularly limited as long as it is a method which allows migration of a sample in accordance with the properties of the sample such as size, weight and shape of the sample, type and density of the charge, and the like, and allows separation or analysis on the basis of the properties of the sample, but preferably, an electrophoresis method using a capillary is preferred. As the preferred electrophoresis method according to the present invention, for example, capillary electrophoresis, capillary zone electrophoresis, capillary isoelectric focusing electrophoresis, capillary isotachophoresis, micellar electrokinetic chromatography, capillary gel electrophoresis, SDS capillary gel electrophoresis, slab electrophoresis, disc gel electrophoresis, SDS-PAGE, native-PAGE, isoelectric focusing electrophoresis (electrofocusing electrophoresis), immunoelectrophoresis, and the like may be mentioned.
Furthermore, the electrophoresis method according to the present invention also includes conventional electrophoresis further combined with techniques such as blotting operation and the like, if necessary.
Next, preferred aspects for performing capillary electrophoretic analysis using the separation medium obtained by self-assembly of the amphiphilic compound according to the present invention in water will be described.
The packing composition for electrophoretic separation and/or analysis of the present invention is characterized by

containing long-shaped self-assemblies which can be prepared by dissolving a low molecular weight amphiphilic compound having a hydrophobic moiety and a hydrophilic moiety in water under heating and cooling the resulting solution. Also, the present invention is to provide a use of long-shaped self-assemblies which can be prepared by dissolving a low molecular weight compound having a hydrophobic moiety and a hydrophilic moiety in water under heating and cooling the resulting solution, as a packing material or medium for electrophoretic separation and/or analysis.

The long-shaped self-assembly according to the present invention refers to a long-shaped structure having a microstructure such as an ultramicrofiber, a tape, a helical-shaped tape transformed by twisting the fiber and the tape, of high aspect ratio having a width of 3 nm to 500 μm and a length of 100 nm to a few mm, a tube having an external diameter of 20 nm to a few ten μm and a length of 100 nm to a few mm, or the like, which microstructure is formed by an amphiphilic compound having introduced with a functional group which is likely to increase intermolecular binding force and its spatial directionality (referred to as anisotropy) (see Non-Patent Documents 7 and 8). Such a structure is fundamentally different from the spherical micelles formed by SDS or the like, or the spherical molecular assemblies formed from naturally occurring phospholipids.

The low molecular weight amphiphilic compound having a hydrophobic moiety and a hydrophilic moiety according to the present invention is not particularly limited as long as it is an amphiphilic compound having a hydrophobic moiety and a hydrophilic moiety which can form long-shaped self-assemblies by dissolving in water under heating and cooling, but preferably, amphiphilic lipids having relatively long chains may be mentioned. Examples thereof include lipids in which straight-chain, branched or cyclic hydrocarbons, fluorocarbons and the like having thymidylic acid, sugars, peptides, phosphoric acid, a pyridinium group, a carboxyl group, an ammonium group, an ammonium phosphate group and the like as the hydrophobic moiety are connected at one or both terminals. Among these, the latter amphiphilic lipids having hydrophobic moieties connected at both terminals are referred to as bolaamphiphiles.

The term "low molecular weight" with regard to the amphiphilic compound of the present invention is used to define the compound other than high molecular weight polymers formed by polymerizing a monomer to have a large number of repeating units, and for example, is used to refer to a molecule having a molecular weight of 50000 or less, preferably 30000 or less, 20000 or less, 10000 or less, or 5000 or less, and not having 50 or more, preferably 40 or more repeating units of a monomer in the molecule.

Such low molecular weight amphiphilic compound can be exemplified by materials such as those described in the Non-Patent Documents 7 and 8. The descriptions of the Non-Patent Documents 7 and 8 are incorporated into the present specification as reference.

The following compounds are preferred examples of the low molecular weight amphiphilic compound of the present invention, however, the present invention is not limited to these exemplary compounds.

An N-glycoside type lipid represented by the following Formula (1):

G-NHCO-R (1)

wherein G represents a saccharide residue resulting from removing a hemiacetal hydroxyl group bonded to the anomeric carbon atom of a saccharide such as glucopyranose, galactopyranose, maltose, lactose, cellobiose or the like; and R represents an unsaturated hydrocarbon group having 10 to 39 carbon atoms,

(see Japanese Patent Application Laid-open (JP-A) No. 2004-224717).

Specific examples of this compound include compounds of the following Formula (2), Formula (3), Formula (4), Formula (5):

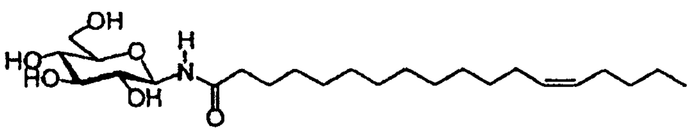

(2)

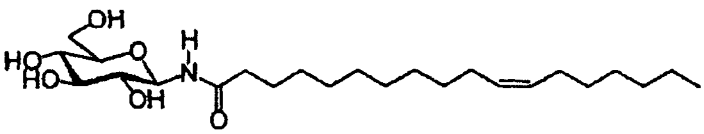

(3)

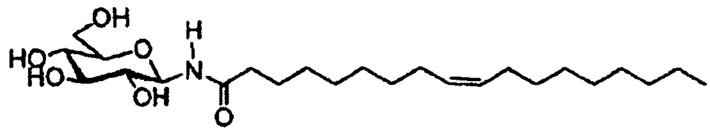

(4)

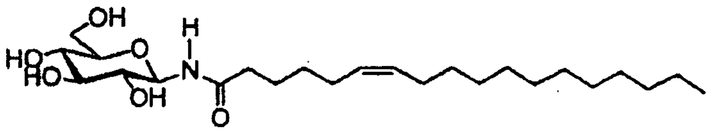

(5)

and the like, and mixtures thereof.
As the compounds which are similar to these N-glycoside type lipids, glycolipids having saturated side chains represented by the following Formula (6):
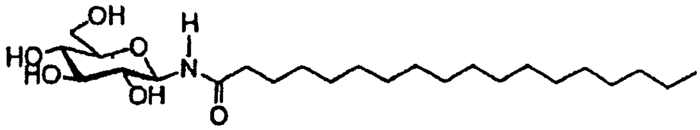

(6)

may be mentioned (see T. Shimizu et al., Langmuir, 2005, 21,743-750).
An O-glycoside type glycolipid having a structure represented by the following Formula (7):

$X^1$-O-Ph-R (7)

wherein $X^1$ represents a glycosyl group, or an oligosaccharide residue formed from 2 to 29, preferably 2 to 5 monosaccharide units bonded together; R represents an unsaturated hydrocarbon group having 10 to 39, preferably 14 to 16 carbon atoms, which is the same as that defined for the Formula (1); and Ph represents a benzene ring, while with respect to the benzene ring, the substitution positions for the group $X^1$-O- and the group R- may be arbitrary, but preferably the positions are meta to each other,
(see JP-A No. 2001-261693 for the method of preparing the lipid; JP-A No. 2003-252893 for the aggregate; and JP-A No. 2003-259893 for the method of preparing the aggregate).
A glycolipid represented by the following Formula (8):

A-Ph-NHCO-$R^1$ (8)

wherein A represents a residue of a saccharide such as glucose, galactose, N-acetylglucosamine, xylose or the like; $R^1$ represents a straight-chain or branched, preferably straight-chain alkyl group having 6 to 20, preferably 10 to 20 carbon atoms; and Ph represents a benzene ring, while with respect to the benzene ring, the substitution positions of the group A- and the group -NHCO-$R^1$ may be arbitrary, but preferably the positions are para to each other,
(see JP-A No. 2003-49154).
More specific examples of the glycolipid represented by the Formula (8) as such include compounds represented by the following Formula (9) and Formula (10):
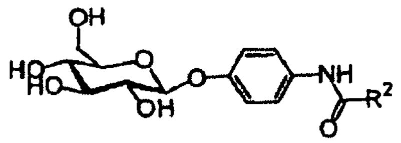

(9)

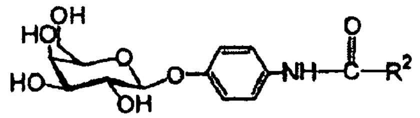

(10)

wherein $R^2$ represents a straight-chain or branched, preferably straight-chain saturated or unsaturated aliphatic hydrocarbon group having 6 to 20, preferably 10 to 20 carbon atoms,
and the like. Specific examples of the group -NHCO-R2 for the Formula (9) include, for example, the following groups (see T. Shimizu, et al., J. Am. Chem. Soc., 2002, 124, 10675):

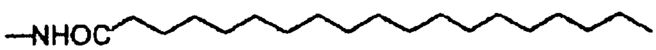

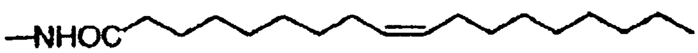

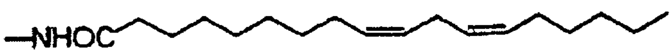

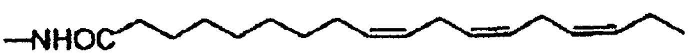

Furthermore, as the derivatives of N-acylated-O-glycosylated-aminophenol which are similar to these compounds, a saccharide-aminophenol derivative of the following Formula (11) or Formula (12):

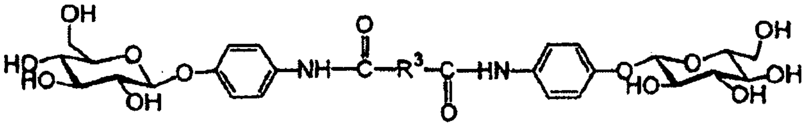

(11)

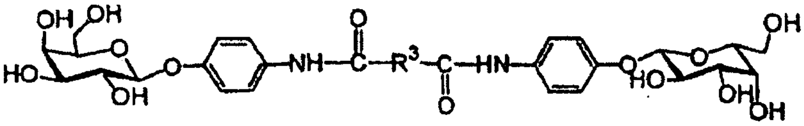

(12)

wherein $R^3$ represents a straight-chain or branched, preferably straight-chain, alkylene group having 4 to 15, preferably 6 to 12 carbon atoms,
(see T. Shimizu et al., Chem. Eur. J., 2002, 8, 160), and the like may be mentioned. Furthermore, as the examples of an azobenzene derivative, an azobenzene derivative represented by the following Formula (13):
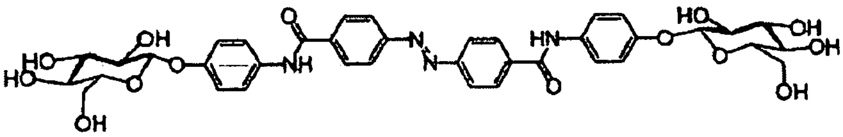

(13)

(see S. Shinkai et al., Org. Lett. 2002, 4, 1423-1426) and the like may be mentioned.
An asymmetric bolaamphiphilic glycolipid having a carboxyl group represented by the following Formula (14):

$$G^1\text{-NHCO-}(CH_2)_n\text{-COOH} \qquad (14)$$

wherein $G^1$ represents an aldose residue from which a reducing terminal hydroxyl group has been removed; and n represents an integer of from 6 to 20,
(see JP-A No. 2002-322190, JP-A No. 2001-261690, and T. Shimizu et al., Langmuir 2004, 20, 5969-5977). The hydroxyl group in this aldose residue may be free, but part or all of the hydroxyl groups may also be protected by a protective group generally used in saccharide synthesis, such as an acetyl group, a benzyl group, an isopropyl group, a methylene group, a benzylidene group or the like.
A bolaamphiphile having a saccharide residue at both terminals, represented by the following Formula (15):

$$G^2\text{-NHCO-}(CH_2)_m\text{-CONH-}G^3 \qquad (15)$$

wherein $G^2$ and $G^3$ each independently represent a residue resulting from removing a reducing terminal hydroxyl group from aldopyranose, such as a glycopyranosyl group, a D-galactopyranosyl group or the like; and m represents an integer of from 6 to 18,
(see JP-A No. 9-143192). More specifically, a bolaamphiphilic glycolipid represented by the following Formula (16):
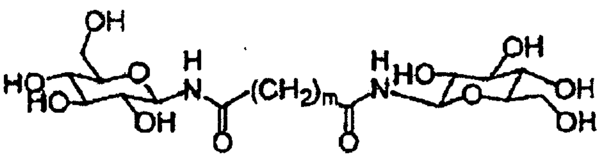

(16)

wherein m represents an integer of from 6 to 18, preferably from 6 to 12,

(see JP-A No. 9-143192, and T. Shimizu et al., J. Am. Chem. Soc., 1997, 119, 2812-2818), and the like may be mentioned. A polymerizable bolaamphiphilic glycolipid represented by the following Formula (17):

$$G^4\text{-NHCO-}(CH_2)_x\text{-C}\equiv\text{C-C}\equiv\text{C-}(CH_2)_y\text{-CONH-}G^5 \quad (17)$$

wherein G4 and G5 each independently represent a residue resulting from removing a reducing terminal hydroxyl group from aldopyranose, or the same residue in which at least a part of the hydroxyl groups are protected; and x and y each independently represent an integer of from 3 to 16, (see JP-A No. 11-255791).

An N-hydrocarbonated aminosaccharide type compound represented by a D-galactose derivative of the following Formula (18), an L-galactose derivative of Formula (19), a D-mannose derivative of Formula (20), an L-mannose derivative of Formula (21), a D-glucose derivative of Formula (22), an L-glucose derivative of Formula (23), and a D-talose derivative of Formula (24):

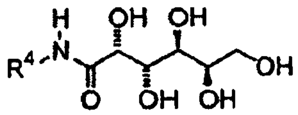

(18)

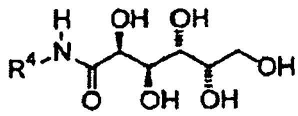

(19)

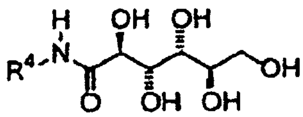

(20)

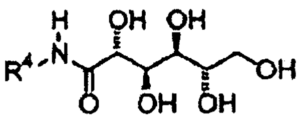

(21)

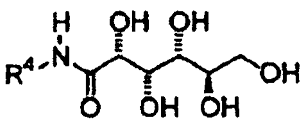

(22)

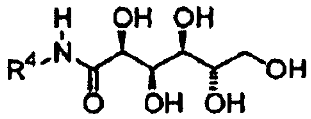

(23)

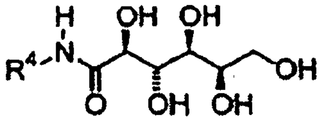

(24)

wherein $R^4$ represents a straight-chain or branched, preferably straight-chain alkyl group having 6 to 15, preferably 8 to 12 carbon atoms, or a straight-chain or branched, preferably straight-chain alkynyl group having 8 to 15 carbon atoms, preferably an alkynyl group represented by the following formula:
$$CH_3\text{-}(CH_2)_p\text{-}C\equiv C\text{-}C\equiv C\text{-}(CH_2)_q\text{-}$$

(wherein p represents an integer of from 1 to 5, and q represents an integer of from 2 to 5),
(see J.-H. Fuhrhop et al., J. Am. Chem. Soc., 1988, 110, 2861-2867 for those having a saturated hydrocarbon type hydrophobic moiety; see J.-H. Fuhrhop et al., J. Am. Chem. Soc., 1991, 113, 7437-7439, D.F. O'Brien et al., J. Am. Chem. Soc., 1991, 113, 7436-7437, and D.F. O'Brien et al., J. Am. Chem. Soc., 1994, 116, 10057-10069 for those having a diacetylene type hydrophobic moiety).
An amidocarboxylic acid type compound represented by the following Formula (25):
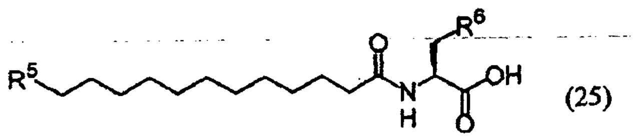

(25)

wherein $R^5$ represents a straight-chain or branched, preferably straight-chain alkyl group having 1 to 15, preferably 1 to 9 carbon atoms; and $R^6$ represents a hydrogen atom, a hydroxyl group, $-CH_2COOH$, $-CH_2CH_2COOH$, $-CH_2CH_2CH_2NH_2$, or $-CH_2CH_2CH_2CH_2NH_2$,
(see J.-H. Fuhrhop et al., Langmuir 2001, 17, 873-877).
A urea carboxylic acid type compound represented by the following Formula (26):
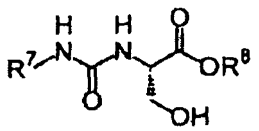

(26)

wherein $R^7$ represents a straight-chain or branched, preferably straight-chain alkyl group having 3 to 15, preferably 3 to 6 carbon atoms; and $R^8$ represents a straight-chain or branched alkyl group having 1 to 10, preferably 1 to 4 carbon atoms, preferably a benzyl group,
(see A.D. Hamilton, Chem. Comm., 2003, 310-311).
A fluorinated glucophospholipid represented by the following Formula (27):
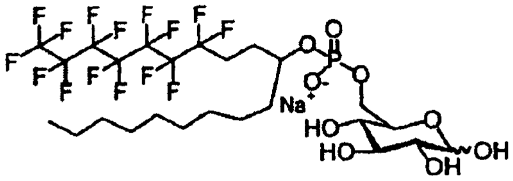

(27)

(see M.-P. Krafft et al., Chem. Eur. J. 1996, 2, 1335-1339).
A pyridinium compound represented by the following Formula (28):
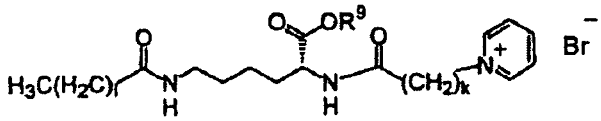

(28)

wherein $R^9$ represents a straight-chain or branched, preferably straight-chain alkyl group having 1 to 5, preferably 1 to 3 carbon atoms; k represents an integer of from 6 to 10, preferably from 8 to 10; 1 represents an integer of from 8 to 15, preferably from 10 to 12,
(see K. Hanabusa, Chem. Eur. J., 2003, 9, 348-354).
A dipeptide-based bolaamphiphile represented by the following Formula (29):
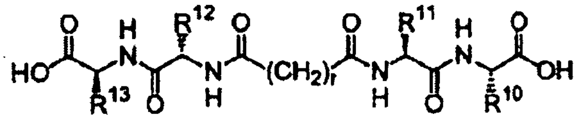

(29)

wherein $R^{10}$, $R^{11}$, $R^{12}$ and $R^{13}$ each independently represent a hydrogen atom or a residue of the side chain of an amino acid, preferably a methyl group (i.e., alanine), an isopropyl group (i.e., valine), a butyl group (i.e., leucine), or an isobutyl group (i.e., isoleucine), but they may be also residues forming one or two or more amino acids selected from the group consisting of glycine, serine, threonine, aspartic acid, glutamic acid, asparagine, glutamine, lysine, hydroxylysine, arginine, cysteine, methionine, phenylalanine, tyrosine, tryptophan, histidine, proline, hydroxyproline, β-alanine and alanine isobutyric acid, in addition to the four amino acid species; and r represents an integer of from 4 to 24, preferably from 7 to 18.
With regard to the dipeptide-based bolaamphiphile represented by Formula (29), there may be preferably mentioned the cases where the groups $R^{10}$, $R^{11}$, $R^{12}$ and $R^{13}$ are each an -isopropyl group (i.e., Val-Val), or an isobutyl group (i.e., Ile-Ile); the case where $R^{10}$ and $R^{13}$ are each an isopropyl group, while $R^{11}$ and $R^{12}$ are each an isobutyl group (i.e., Val-Ile, or vice versa); the case where $R^{10}$ and $R^{13}$ are each an isobutyl group, while $R^{11}$ and $R^{12}$ are each an isopropyl group (i.e., Ile-Val, or vice versa); the case where $R^{10}$ and $R^{13}$ are each an isobutyl group, while $R^{11}$ and $R^{12}$ are each

- $CH_2CH_2SCH_3$ (i.e., Ile-Met, or vice versa); the case where $R^{10}$ and $R^{13}$ are each -$CH_2CH_2SCH_3$, while $R^{11}$ and $R^{12}$ are each an isobutyl group (i.e., Met-Ile, or vice versa); or the like. These amino acids may be racemates, or may be optically active substances of either D-isomer or L-isomer. It is preferable that all the amino acids are optically active substances of either D-isomer or L-isomer.
  Furthermore, the dipeptide-based bolaamphiphile represented by Formula (29) may also be a tripeptide-based bolaamphiphile represented by the following Formula (30) or Formula (31):

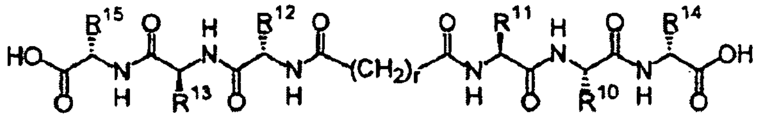 (30)

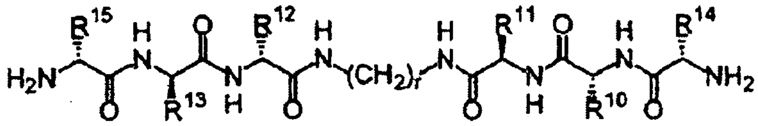 (31)

wherein $R^{10}$, $R^{11}$, $R^{12}$, $R^{13}$ and r have the same meaning as defined for the Formula (29); and $R^{14}$ and $R^{15}$ each independently have the same meaning as defined for $R^{10}$, $R^{11}$, $R^{12}$ or $R^{13}$. With regard to the tripeptide moiety in the tripeptide-based bolaamphiphile represented by Formula (30) or Formula (31), the amino acid arrangement of the tripeptide moiety is preferably Val-Val-Val, Ile-Ile-Ile, Ile-Val-Val, Val-Ile-Val, Val-Val-Ile, or the reverse arrangement thereof. These amino acids may also be any of racemates and optically active substances, but preferably, there may be mentioned the case where all of the amino acids are optically active substances of either D-isomer or L-isomer. These dipeptide-based bolaamphiphiles may be found in the literature of Shimizu et al. (T. Shimizu et al., Chem. Commun., 1988, 1791), and in Japanese Patent No. 3012932.
A deoxyribose type compound represented by the following Formula (32):
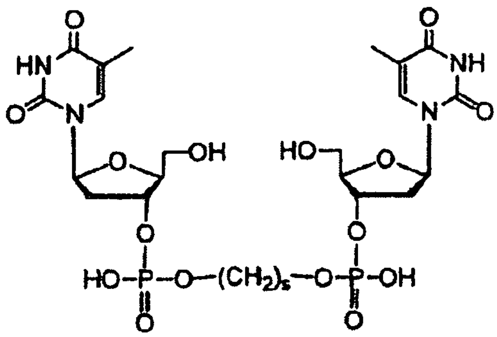 (32)

wherein s represents an integer of from 12 to 24, preferably 18 to 20,
(see R. Iwaura et al., Chem. Mater., 2002, 14, 3047, and JP-A No.2003-55642).
A diacetylene compound represented by the following Formula (33):
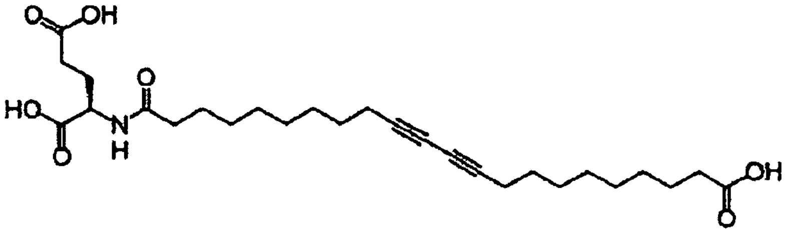 (33)

(see R.C. Stevens, J. Am. Chem. Soc., 2001, 123, 3205-3213).
A phosphoammonium compound represented by the following Formula (34):
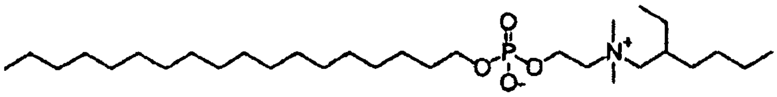

(34)

(see F.M. Menger et al., J. Am. Chem. Soc., 2002, 124, 12408-12409).
An ethylenediammonium compound represented by the following Formula (35):

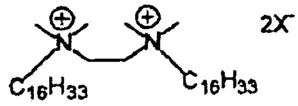

(35)

wherein $2X^-$ represents a tartaric acid salt represented by formula:

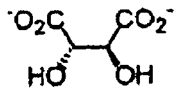

,

an enantiomer or mesomer thereof, or two bromine ions,
(see I. Huc et al., Angew. Chem., Int. Ed. 1998, 37, 2689-2691).
A α-methyl glucose acetal derivative represented by the following Formula (36):

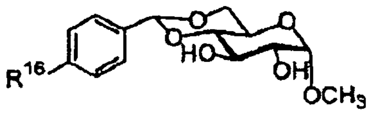

(36)

wherein $R^{16}$ represents a hydrogen atom or a nitro group,
(see S. Shinkai et al., Chem. Eur. J., 1999, 5, 2722-2728).
A glycosylated amino acid derivative represented by the following Formula (37):

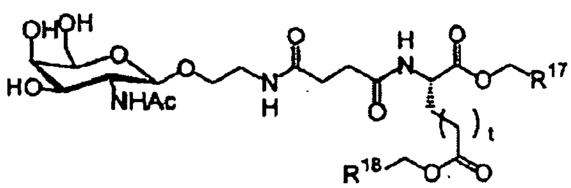

(37)

wherein $R^{17}$ and $R^{18}$ each independently represent a straight-chain or branched, preferably straight-chain alkyl group having 6 to 10, preferably 6 to 8 carbon atoms, or a cyclopentylmethyl group or a cyclohexylmethyl group; t represents an integer of from 0 to 3, preferably from 0 to 1
(see I. Hamachi et al., J. Am. Chem. Soc., 2002, 124, 10954-10955).
A urea type long chain alkyl ester compound represented by the following Formula (38):

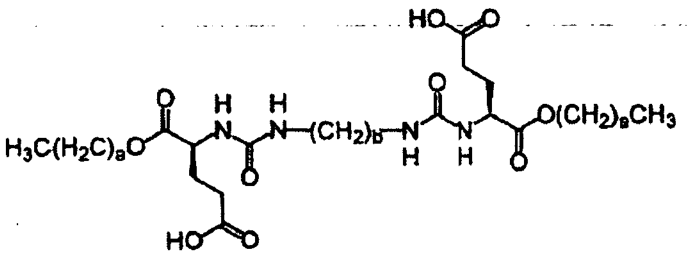

(38)

wherein a each independently represent an integer of from 3 to 15, preferably from 7 to 14; and b represents an integer of from 4 to 15, preferably from 4 to 12,
(see A.D. Hamilton, et al., Angew. Chem. Int. Ed., 2000, 39, 3448).
A long chain phenyl-β-D-glucopyranoside represented by the following Formula (39), Formula (40), Formula (41) or Formula (42):
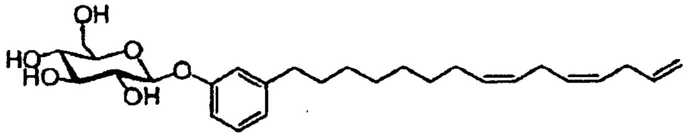

(39)

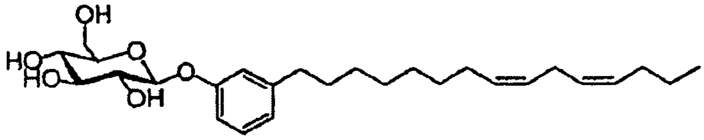

(40)

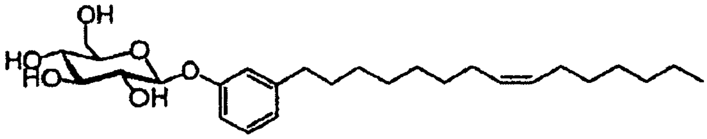

(41)

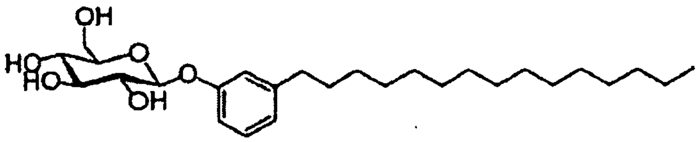

(42)

(see T. Shimizu, et al., Adv. Mater., 2001, 13, 715-718), or mixtures of these compounds.
A compound having phosphocholine at both terminals, represented by the following Formula (43):
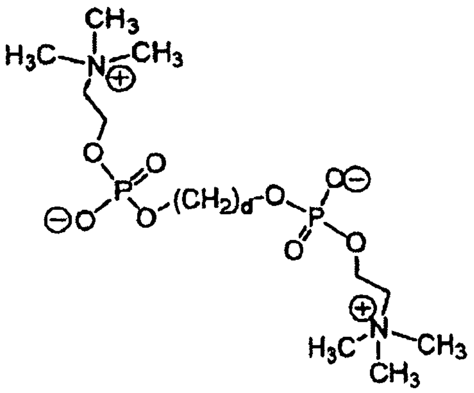

(43)

wherein d represents an integer of from 22 to 40,
(A. Blume, et al., Angew. Chem. Int. Ed., 2004, 43, 245-247).
An urea bisglutamic acid hemiester derivative represented by the following Formula (44):
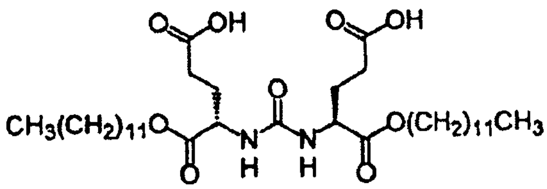

(44)

(see A.D. Hamilton et al., Chem. Commun. 2003, 2958-2959).
A dimorpholinophosphoramidate derivative represented by the following Formula (45):
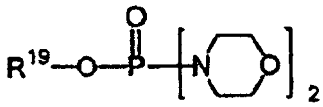

(45)

wherein $R^{19}$ represents a straight-chain or branched, preferably straight-chain alkyl group having 8 to 15, preferably 10 to 12 carbon atoms, or a straight-chain or branched, preferably straight-chain fluorinated alkyl group having 8 to 15, preferably 10 to 12 carbon atoms, $R^{19}$ being preferably exemplified by a $-C_{10}H_{21}$ or $C_8F_{17}-C_2H_4-$ group,
(see Angew. Chem. Int. Ed., 1994, 33, 1514).
A phosphocholine derivative represented by the following Formula (46):
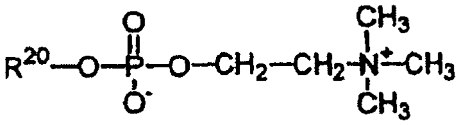

(46)

wherein $R^{20}$ represents a straight-chain or branched, preferably straight-chain alkyl group having 8 to 15, preferably 10 to 15 carbon atoms, or a straight-chain or branched, preferably straight-chain fluorinated alkyl group having 8 to 15, preferably 10 to 15 carbon atoms, with $R^{20}$ being preferably a

- $C_{10}H_{21}$, $-C_{15}H_{31}$ or $C_8F_{17}-C_2H_4-$ group,

(see M.-P. Krafft, et al., Angew. Chem. Int. Ed., 1994, 33, 1514).
A urea hydroxycarboxylic acid ester derivative represented by the following Formula (47):

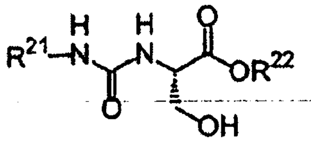

(47)

wherein $R^{21}$ represents an n-butyl group, a 4-bromobenzyl group, or a methacryloxyethyl group; and $R^{22}$ represents a straight-chain or branched, preferably straight-chain alkyl group having 1 to 4 carbon atoms,
(see A.D. Hamilton, Chem. Commun., 2003, 310-311).
A diacetylenic glyceride derivative represented by the following Formula (48):
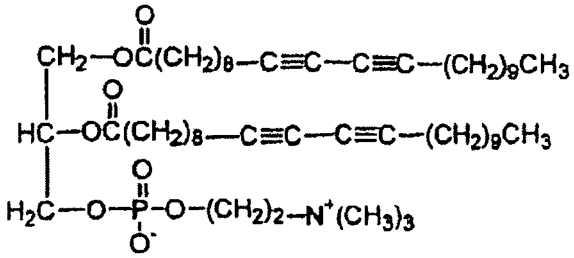

(48)

(see P. Yager, et al., Mol. Cryst. Liq. Cryst., 1984, 106, 371-381; J.M.Schnur, Science, 1993, 262, 1669-1676).
A long chain amide derivative of lysine, represented by the following Formula (49):
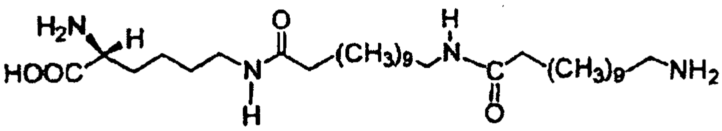

(49)

A trismethioninecyclohexane derivative represented by the following Formula (50):
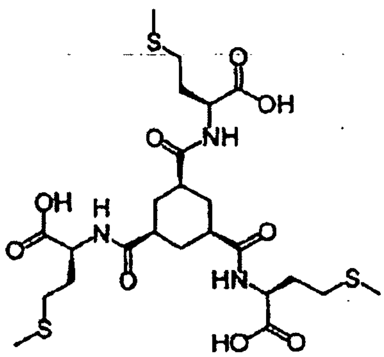

(50)

(see B.L. Feringa et al., J. Am. Chem. Soc., 2003, 125, 14252-14253).
A trisphenylalaninecyclohexane derivative represented by the following Formula (51):

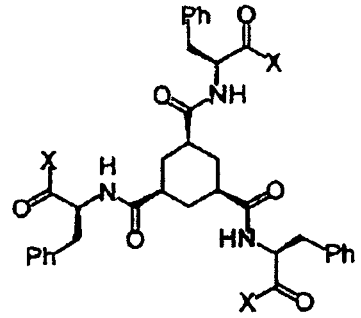

(51)

wherein X each independently represent a $-O-(CH_2)_2-OH$ group, or a $-NH-(CH_2)_2-O-(CH_2)_2-OH$ group, (see B.L. Feringa, et al., J. Am. Chem. Soc., 2003, 125, 14252-14253).
A lithocholic acid represented by the following Formula (52):
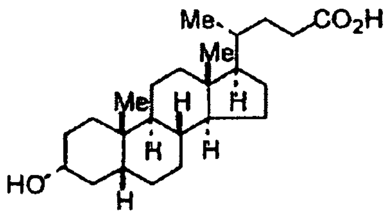

(52)

(see Y. Talmon et al., Langmuir, 2002, 18, 7240-7244).
A polyglycine derivative represented by the following Formula (53):
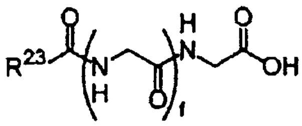

(53)

wherein $R^{23}$ represents a straight-chain or branched, preferably straight-chain alkyl group having 4 to 24, preferably 7 to 18 carbon atoms; and f represents an integer of from 1 to 3,
or a sodium salt thereof (see Japanese Patent No. 2003-039276).
A polyglycine derivative represented by the following Formula (54):
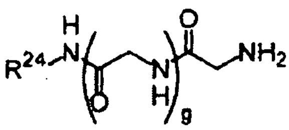

(54)

wherein $R^{24}$ represents a straight-chain or branched, preferably straight-chain alkyl group having 4 to 24, preferably 7 to 18 carbon atoms; and g represents an integer of from 1 to 3,
or a hydrochloride salt thereof.
A polymerizable bolaamphiphilic glycolipid represented by the following Formula (55):

$$G^6\text{-NHCO-}R^{25}\text{-C}\equiv\text{C-C}\equiv\text{C-}R^{26}\text{-Z} \quad (55)$$

wherein $G^6$ represents a residue resulting from removing a reducing terminal hydroxyl group from aldopyranose, preferably a D-glucopyranosyl group or an L-glucopyranosyl group; Z represents a hydrogen atom, a hydroxyl group, a carboxyl group, an amino group, or an aminoethylcarbamoyl group; and $R^{25}$ and $R^{26}$ each independently represent a divalent hydrocarbon group having 0 to 20 carbon atoms, preferably a polymethylene group having 0 to 20 carbon atoms.

Furthermore, an ionic surfactant such as a sodium salt of oleic acid or dodecyltrimethylammonium chloride; a non-ionic surfactant such as octaethylene glycol tetradecyl ether, dodecyldimethylamine oxide; a phospholipid (zwitterionic) such as palmitoyl lysophosphatidylcholine, oleoyl lysophosphatidylcholine, linoleoyl lysophosphatidylcholine; and the like may be mentioned.

The packing composition for electrophoretic separation and/or analysis of the present invention is not particularly limited as long as the composition contains long-shaped self-assemblies formed from the amphiphilic compound of the present invention described above. Also, this packing composition for separation and/or analysis containing long-shaped self-assemblies, or a hydrogelated product thereof may also contain a polymeric compound as described below, as a mixture. Examples of such polymeric compound include hydroxyethylcellulose having a number average molecular weight of 10,000 to 1,000,000, preferably 10,000 to 500,000; hydroxypropylcellulose having a number average molecular weight of 10,000 to 1,000,000, preferably 10,000 to 500,000; polyacrylamide having a number average molecular weight of 10,000 to 1,000,000, preferably 10,000 to 500,000; and the like. These separation media and the polymer mixture described above are used in the form of an aqueous solution at a concentration of about 0.01% to 30%, preferably 0.1 to 20%, and more preferably 0.1 to 10%.

Therefore, the present invention is to provide a packing composition for separation and/or analysis comprising a separation medium which contains long-shaped self-assemblies formed from the amphiphilic compound of the present invention described above, or a hydrogel-like separation medium for separation medium which is characterized by being formed by a physical crosslinked structure. Moreover, the present invention is to provide a packing composition in which the long-shaped self-assemblies or hydrogel contains sieves of hydroxyethylcellulose, hydroxypropylcellulose, polyacrylamide or the like.

For the method of preparing the long-shaped self-assemblies of the present invention, usually the self-assemblies can be prepared by dissolving the amphiphilic compound of the present invention which forms the long-shaped self-assembly structures in a solvent such as water or the like, stirring and deaerating the solution if necessary, then heating to convert the solution to a sol state, and cooling the resulting colloidal solution. Depending on the amphiphilic compound to be used, formation of sol may be achieved by treatments such as pH adjustment, irradiation of light such as ultraviolet radiation or the like, instead of the heating treatment described above. The concentration of the amphiphilic compound of the present invention may be about 0.1 to 30% by weight, preferably 0.1 to 20% by weight, or 0.1 to 15% by weight. As the solvent to be used, pH-adjusted water may be mentioned, and preferably various buffering solutions may be mentioned. A preferred buffering solution may be TE buffer at pH 8 (10 mM Tris-HCl (pH 8.0), 1 mM EDTA), phosphate buffer at pH 2.5 to 7.5, borate buffer, 2-[4-(2-hydroxyethyl)-1-piperazinyl]ethanesulfonic acid (HEPES), N-tris(hydroxymethyl)methyl-e-aminoethanesulfonic acid (TES), Tris-HCl-glycine buffer, Tris-phosphate buffer, or mixtures thereof. As a more preferred buffer solution, TE buffer at pH 8 (10 mM Tris-HCl (pH 8.0), 1 mM EDTA) may be mentioned. The pH value of the aqueous solution adjusting the gel is not particularly limited, and depending on the amphiphilic compound to be used, any value between about pH 1 to 10, preferably pH 2 to 10, may be favorable.

Also, if necessary, methanol, ethanol, acetonitrile, THF, dioxane and the like may be contained as additives, in an amount of about 0 to 50%.

To explain more specifically the method of preparing the self-assemblies of the composition for separation and/or analysis of the present invention, a solution of an amphiphilic compound is thoroughly deaerated by ultrasonicating at room temperature, and then heated to attain a sol state; specifically, heated to 50°C to 100°C to attain a complete sol state. The resultant is placed in a vessel for separation medium and is gelated. In the case where a capillary is used as the vessel for separation medium, the sol is introduced into a capillary (which has been, if necessary, pretreated as will be described later) by suctioning, pressurizing or the like using a syringe or a sample injection device of a capillary electrophoresis apparatus. Then, this capillary as a whole can be air-cooled, or cooled using a capillary temperature controller installed in the electrophoresis apparatus, thus to prepare a hydrogel structure for a separation medium comprising long-shaped self-assemblies.

The vessel for the separation medium of the present invention is not particularly limited, as long as it is a vessel which can hold a gel as a separation medium for electrophoresis, and specific examples thereof include a vessel to hold a slab gel, a capillary for capillary electrophoresis, and the like.

In the case of using a capillary as the vessel for the separation medium of the present invention, a capillary having an internal diameter of about 500 nm to 3 mm can be used, but from the viewpoint of resolution, the amount of sample and

the like, one having an internal diameter of about 50 μm to 100 μm is the best. The length may vary with the sample, but is desirably from 2 cm to 3 m. The material of the capillary may be any of Pyrex (registered trademark) glass, fused silica (molten quartz) and Teflon (registered trademark), but fused silica is preferable. In the case of using the glass or silica described above, the external wall may be covered with polyimide to give strength and flexibility, however it is not essential.

As a pretreatment of the capillary, an operation which will be described below is preferably performed before packing the packing composition for separation and/or analysis. For example, the internal wall is washed in advance with a solvent such as chloroform, methanol or the like to remove any attached organic materials. Then, the internal wall is further washed with strong acid and subsequently with strong alkali, so as to remove any inorganic materials on the internal wall, and at the same time, to modify the surface with a silanol group. Thereafter, the surface is treated with (3-methacryloxypropyltrimethoxysilane), which is a silane coupling agent, subsequently acrylamide is introduced to perform graft polymerization, and the resultant (a product with the internal wall treated with non-crosslinked polyacrylamide) is used.

Cooling of the capillary packed with a thermal aqueous solution of the amphiphilic compound may be performed in the manner of rapid cooling by air cooling, but the rate of change may vary from about 20°C/sec to 0.1°C/min.

The capillary electrophoresis using the separation medium thus obtained can be conducted as described below. First, a capillary having a length of 30 cm, packed with a separation medium, is installed in a capillary electrophoresis apparatus, and the temperature is desirably adjusted to 5°C to 50°C, preferably approximately around 20°C. For the sample, DNA, RNA, proteins and the like are measurable, but DNA and proteins are preferred. Particularly in the case of a protein, it is favorable to denature the protein in advance with SDS or the like. Also, the solvent used in the electrophoresis is preferably the same solvent as that used in forming the long-shaped self-assemblies or a hydrogel thereof. Particularly in the case of separating DNA, the above-described TE buffer is most suitable.

Before the separation, when a sample is introduced into the capillary, any of electrophoresis, suctioning, and pressurizing may be used; however, in order to prevent leaching of the hydrogel as the separation medium or of a polymer solution, it is most suitable to introduce the sample by applying a voltage while pressurizing the buffer reservoir vessels on both sides of the capillary to about 5 psi. After introducing the sample into the capillary, electrophoresis is performed. Although the applied voltage may vary according to the length of the capillary, the voltage is preferably 50 V/cm to 500 V/cm.

Detection is performed, in the case of DNA, by monitoring the absorbance at 254 nm or 234 nm. Also, if the sample is in a trace amount, it is also possible to fluorescent-label the sample and to measure the sample by means of fluorescence.

When the gel deteriorates to result in a decrease in the resolution or a notable change over time, or when the sieve is clogged with samples, impurities or the like, thus causing an increase in the pressure, it is possible to replace the separation medium simply in the following manner. First, the entire capillary is heated to 50°C to 100°C to return the separation medium to the state of sol. Next, while maintaining this temperature, this sol is taken out to the outside of the capillary by pressurizing the supply reservoir side, or by suctioning from the receptor reservoir side. At the same time, a new separation medium solution which has been heated to 50°C to 100°C is similarly packed into the inside of the capillary by pressurizing the supply reservoir side, or by suctioning from the receptor reservoir side. After this, the capillary is rapidly cooled by air cooling, or slowly cooled at a rate in the range of 20°C /sec to 0.1 °C /min to obtain a capillary mounted with a new separation medium.

The packing composition for separation and/or analysis of the present invention is characterized in that a sol state with fluidity is attained by heating, pH adjustment or the like, and thereby it is possible to replace the separation medium only without detaching the capillary. Therefore, by using the packing composition for separation and/or analysis of the present invention, it becomes possible to use the capillary semi-permanently without detaching the capillary.

This replacement can also be connected to a computerized controller and completely automated, by installing a program which can change the temperature from 0°C to 100°C in a capillary thermostat of a capillary electrophoresis apparatus, and mounting a sol solution in a sample tray equipped with a temperature controllable heating apparatus.

Effects of the Invention

The present invention is to provide an electrophoresis method which is inexpensive and highly reproducible and allows easy replacement of the separation medium, by using a reversible and easily packable long-shaped structure formed from self-assemblies of an amphiphilic compound and a hydrogel separation medium formed from a physically crosslinked structure resulting from the long-shaped structure, as the separation medium for electrophoresis, particularly for capillary electrophoresis.

The capillary column packed with the long-shaped structure formed by self-assembly of a molecule having a hydrophilic moiety and a hydrophobic moiety for the separation medium of the present invention or with the hydrogel-like structure formed from the long-shaped structure has a high theoretical plate number, has an extremely sharp resolution compared to conventional packing agents, and is stable over a long time. Furthermore, for the amphiphilic compound which can perform self-assembly of the long-shaped structure as described above, a variety of different compounds are known,

and an amphiphilic compound appropriate for analysis may be selected among the variety of different amphiphilic compounds in accordance with the sample to be analyzed or the purpose of the analysis. Moreover, since the packing composition for separation and/or analysis of the present invention is redissolved by a heating treatment or the like, in the case where the separation medium deteriorates due to clogging or the like, it is possible to replace the packing agent as the sieve without detaching the capillary. Because of this, the capillary can be used semi-permanently through this replacement. It is also possible to adjust the size or shape of the reticulations of the sieve in accordance with the type or molecular weight of the sample, by changing the concentration or the type of the amphiphilic compound which serves as the raw material of the hydrogel during the replacement.

Furthermore, even when such long-shaped structure is not crosslinked (when not forming a hydrogel), replacement is very simple, similarly to the separation medium formed from a linear-chain polymer solution as described thus far, and the shape, size (i.e., the size of the physical reticulations) or solidness of the sieve can be controlled by the cooling rate, solvent, concentration of the amphiphilic compound or the like. From these characteristics, the present invention is useful for electrophoresis methods with high theoretical plate number, for example capillary electrophoretic analysis, of high molecular weight substances having a wide range of molecular weight, such as DNA, RNA, proteins, as well as low molecular weight substances such as saccharide chains, peptides, lipids and natural physiologically active substances, amino acids.

Brief Description of the Drawings

Fig. 1 is a schematic diagram of a capillary electrophoresis apparatus.

Fig. 2 shows a chromatogram (electropherogram) of an analysis of a ladder DNA of 50 to 10,000 bp, with the inside of the capillary filled with TE buffer.

Fig. 3 shows a chromatogram (electropherogram) of an analysis of a ladder DNA of 50 to 10,000 bp, with the inside of the capillary filled with gel buffer.

Fig. 4 shows a chromatogram (electropherogram) of an analysis of a ladder DNA of 50 to 10,000 bp, with the inside of the capillary filled with a 0.5 wt% self-assembled hydrogel of the packing composition for separation and/or analysis of the present invention.

Fig. 5 shows a chromatogram (electropherogram) of an analysis of a ladder DNA of 50 to 10,000 bp, with the inside of the capillary filled with a 2 wt% self-assembled hydrogel of the packing composition for separation and/or analysis of the present invention.

Fig. 6 shows a chromatogram (electropherogram) of an analysis of a ladder DNA of 50 to 800 bp, with the inside of the capillary filled with TE buffer.

Fig. 7 shows a chromatogram (electropherogram) of an analysis of a ladder DNA of 50 to 800 bp, with the inside of the capillary filled with gel buffer.

Fig. 8 shows a chromatogram (electropherogram) of an analysis of a ladder DNA of 50 to 800 bp, with the inside of the capillary filled with a 2 wt% self-assembled hydrogel of the packing composition for separation and/or analysis of the present invention.

Fig. 9 collectively shows the chromatogram (electropherogram) of an analysis of a ladder DNA of 50 to 10,000 bp, with the inside of the capillary shown in Fig. 3 filled with gel buffer (a), and the chromatogram (electropherogram) of an analysis of a ladder DNA of 50 to 10,000 bp, with the inside of the capillary shown in Fig. 5 filled with a 2 wt% self-assembled hydrogel of the packing composition for separation and/or analysis of the present invention (b).

Fig. 10 is a schematic diagram of a slab electrophoresis apparatus used in Example 2.

Fig. 11 shows a chromatogram (electropherogram) of electrophoresis of ladder DNAs (the numbers 1, 2 and 3 in the figure correspond to ladders of 20 bp, 100 bp and 200 bp, respectively) using a conventional 4% polyacrylamide gel as the slab gel.

Fig. 12 shows a chromatogram (electropherogram) of electrophoresis of ladder DNAs (the numbers 1, 2 and 3 in the figure correspond to ladders of 20 bp, 100 bp and 200 bp, respectively) using a mixture of a 4% polyacrylamide gel and 0.004% of the long-shaped self-assemblies formed from L-tartaric acid salt of the compound 35 of the present invention as the slab gel.

Description of the reference numerals

1 Capillary column
2 Buffer solution vessel

3 Sample vessel
4 Buffer solution vessel
5 Ultraviolet-visible light absorbance detector
6 Direct current power supply
11 Gel plate of Fig. 10
12 Buffer solution vessel of Fig. 10
13 Direct current power supply of Fig. 10

Best Mode for Carrying Out the Invention

Hereinafter, the present invention will be described in more detail with reference to Examples, however, the invention is not intended to be limited thereto.

EXAMPLE 1

(1) Packing of capillary with self-assemblable hydrogel

First, in a glass vessel, 1,20-3'-thymidylic acid bolaamphiphile of the following formula:
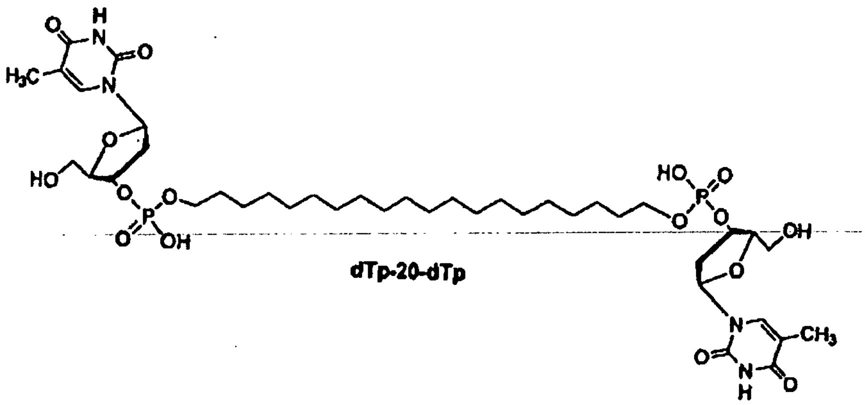

dTp-20-dTp

which is a self-assemblable amphiphilic compound (see R. Iwaura et al. Chem. Mater., 2002, 14, 3047, and JP-A No. 2003-55642) (10 mg, 0.01 millimoles, or 5 mg, 0.005 millimoles) was measured, and to this, 0.5 mL of TE buffer (Wako Pure Chemical Industries, Ltd., product No. 316-90025) at pH 8 was added. The mixture was dissolved while heating with a heat gun to prepare solutions containing 2% by weight and 0.5% by weight of the amphiphilic compound. These solutions were filtered through a 0.45 micron membrane filter (Gelman Science Japan, Ltd., product No. 4457).
Next, the above-described solution containing the amphiphilic compound at a temperature of 40 to 60°C was set into a capillary electrophoresis apparatus (Beckman Coulter, Inc., P/ACE System MDQ), and by pressurizing at 10 psi for 3 minutes, the solution was packed into the inside of a polyacrylamide-coated silica gel capillary (Beckman Co., Ltd., Product No. 477477) having an internal diameter of 75 microns and a length of 30 cm. Thereafter, while keeping the inside of the capillary from drying, the capillary was left to stand for 3 days at room temperature, with the both terminals being immersed in a solution containing the above-described amphiphilic compound. Thus, a hydrogel formed by self-assembly of an amphiphilic compound was obtained in a silica gel capillary having an internal diameter of 75 microns. It was confirmed from electron microscopic observation of the capillary cross-section that in the capillary described above, fibrous self-assemblies having a width of about 100 nm exist in a structure entangled in the form of three-dimensional reticulations.

(2) Apparatus

A capillary packed with the hydrogel obtained according to the above-described method was mounted to the electrophoresis apparatus depicted in Fig. 1, and DNA detection was performed using TE buffer which is a buffer at pH = 8, and by applying a voltage of 10 kV at 20°C. Additionally, in the Fig. 1, reference numeral 1 denotes a capillary column, 2 denotes a buffer solution vessel, 3 denotes a sample vessel, 4 denotes a buffer solution vessel, 5 denotes

an ultraviolet-visible light absorbance detector, and 6 denotes a direct current power supply, and electrodes are inserted into 2 to 4. When a sample was to be loaded, the capillary column 1 and the electrode were transferred to the sample vessel 3, and a voltage of 6 kV was applied thereto for 10 seconds. Also, in the separation of DNA, the capillary column 1 and the electrode were transferred to the buffer solution vessels 2 and 4, and a voltage of 10 kV was applied. Furthermore, in order to prevent leaching of the self-assemblable hydrogel from the inside of the capillary, a pressure of 5 psi was applied through both ends of the capillary. Detection of DNA was performed by monitoring a wavelength of 254 nm by means of the ultraviolet-visible light absorbance detector 5.

(3) Analysis results 1

Fig. 2 presents the analysis results of a ladder DNA (50 to 10,000 bp, Takara Bio Inc., product No. 3415A) for the case where the inside of the capillary was filled with TE buffer; Fig. 3 for the case where the inside of the capillary was filled with a gel buffer (Beckman Coulter, Inc., product No. 477628); Fig. 4 for the case where the inside of the capillary was packed with the hydrogel obtained by self-assembly of an amphiphilic compound at a concentration of 0.5% by weight (hereinafter, referred to as hydrogel of 0.5 wt%); and Fig. 5 for the case where the inside of the capillary was packed with the hydrogel obtained by self-assembly of an amphiphilic compound at a concentration of 2% by weight (hereinafter, referred to as hydrogel of 2 wt%). In Figs. 2 to 5, the horizontal axis represents time and the vertical axis represents the intensity of signals. From these analysis results, as shown in Fig. 2 and Fig. 4, the ladder DNAs were virtually not separated in the capillary filled with TE buffer only and the capillary packed with the 0.5 wt% hydrogel. On the other hand, in the 2 wt% hydrogel shown in Fig. 5, a very sharp peak was obtained at rt = around 5 to 7 minutes, as compared to the capillary filled with buffer gel in Fig. 3.
In this way, the packing composition for separation and/or analysis of the present invention not only can be replaced by heating, pH adjustment or the like, but also can result in very sharp separation and/or analysis compared to conventional packing compositions for separation and/or analysis, by utilizing the action of a sieve having a unique structure called long-shaped self-assemblies.

(4) Analysis results 2

Fig. 6 presents the analysis results of a ladder DNA (50 bp to 800 bp, Introgen Therapeutics, Inc., product No. 10416-014) for the case where the inside of the capillary was filled with TE buffer; Fig. 7 for the case where the inside of the capillary was filled with gel buffer (Beckman Coulter, Inc., product No. 477628); and Fig. 8 for the case where the inside of the capillary was filled with the self-assemblable 2 wt% hydrogel. From these analysis results, it was found that separation of DNA is possible in the range from 50 bp to 800 bp, using the hydrogel separation medium 2 wt% obtained by self-assembly in the capillary shown in Fig. 8.

(5) Interpretation of theoretical plate number

**[0131]** To compare the results presented in Fig. 3 described above (electropherogram for the analysis of a ladder DNA of 50 to 10000 bp, with gel buffer being filled) with the results presented in Fig. 5 (electropherogram for the analysis of a ladder DNA of 50 to 10000 bp, with the self-assemble hydrogel 2 wt% formed from the compound 32 being filled as the packing composition for separation and/or analysis of the present invention), these are presented in Fig. 9(a) and (b), respectively. Then, the respective peaks were assigned No. 1 to No. 6 from the left side as shown in Fig. 9. Theoretical plate numbers were calculated with respect to the respective peaks shown in Fig. 9. The theoretical plate numbers were determined using the following formula:

$$\text{Theoretical plate number} = 16[t_r/W]^2$$

wherein $t_r$ represents the migration time, and W represents the value of peak width (double of the half-width).
The respective theoretical plate numbers calculated for the peaks using this calculation formula are presented in the following Table 1.
[Table 1]

| Peak No. | Theoretical plate number | |
|---|---|---|
| | Present invention | Conventional method |
| 1 | 87,190 | 201,760 |
| 2 | 185,840 | 30,710 |
| 3 | 167,250 | 22,980 |
| 4 | 515,959 | 37,680 |
| 5 | 590,210 | 177,780 |
| 6 | 6,600 | 33,400 |

With regard to the peaks 2 to 5 as shown in Table 1, the separation medium of the present invention exhibited larger theoretical plate numbers than the conventional gel buffer (Beckman Coulter, Inc., product No. 477628) (Fig. 9 (a)), and it was found that even sharper separation and/or analysis was possible with the hydrogel separation medium of the present invention.

EXAMPLE 2

4.958 mL of sterilized water was added to ethanediyl-1,2-bis(hexadecyldimethylammonium bromide) (compound 35, (see I. Huc et al., Angew. Chem., Int. Ed. 1998, 37, 2689-2691 for the synthesis) (19.94 mg, 0.0352 mmol), which is a self-assemblable compound, and an equivalent of L-tartaric acid (6.82 mg, 0.0351 mmol)), and the mixture was dissolved under heating, to condition a hot aqueous 0.4 wt% solution of compound 35 in L-tartaric acid salt.
Next, a solution was obtained by dissolving 1.5 mL of 40% acrylamide/bis solution (BIORAD, Inc., product No. 161-0146), 3.9 mL of 0.5×TBE buffer solution (50-fold dilution of 10×TBE of BIORAD, Inc., product No. 161-0733), 9.375 mL of sterilized water, and 0.1 g of ammonium persulfate (Wako Pure Chemical Industries, Ltd., product No. 018-03282) dissolved in 1 mL of sterilized water, and 0.075 mL of this solution was mixed into a gel solution. To this gel solution, 0.15 mL of the hot aqueous solution formed of the above-described L-tartaric acid salt of compound 35 was added in a state of being maintained at 90 to 100°C. Further, 7.5 mL of N,N,N',N'-tetramethylethylenediamine (Wako Pure Chemical Industries, Ltd., product No. 205-06313) was added, then the gel solution was rapidly packed into a gel plate, and this was left to stand at room temperature for 1 hour to form a gel.
As shown in Fig. 10, the gel plate 11 packed with the gel according to the method described above was mounted on an electrophoresis apparatus equipped with a buffer solution vessel 12 and a direct current power supply 13, and DNA separation was performed using 0.5×TBE buffer solution as the electrophoretic buffer, and by applying a constant voltage of 80 V at room temperature. After the electrophoresis, the gel was immersed in an ethidium bromide solution (10-4 mg/mL, 0.5(TBE buffer solution) for 30 minutes, and then DNA bands were observed by irradiating ultraviolet radiation using an ultraviolet irradiating apparatus.

Analysis Result

The results of respectively separating 3 types of ladder DNA samples (Takara Bio Inc., 20 bp DNA Ladder product No. 3409A, 100 bp DNA Ladder product No. 3407A, 200 bp DNA Ladder product No. 3410A) of a 20 bp DNA ladder standard sample of a 740-20 bp DNA molecule with fragment of 20 bp, a 100 bp DNA ladder standard sample of a 1500 bp to 100 bp DNA molecule with fragment of 100 bp, or a 200 bp DNA ladder standard sample of a 5000 to 200 bp DNA molecule with fragment of 200 bp, are shown in Fig. 11 for the case of using a 4% polyacrylamide gel, and in Fig. 12 for the case of using a 4% polyacrylamide gel containing the long-shaped self-assemblies formed of 0.004% of L-tartaric acid salt of compound 35. The reference numerals 1, 2 and 3 in Figs. 11 and 12 correspond to the three types of ladder DNAs in that order. When electrophoresis was performed using a 4% polyacrylamide gel containing long-shaped self-assemblies, the band width became narrower compared to the case of using polyacrylamide gel, and it can be seen that particularly the resolution for DNA of 2000 to 3000 bp has been improved.
From these results, it was found that it is possible to perform excellent separation in slab electrophoresis by adding a small amount of long-shaped self-assemblies, as compared to using conventional acrylamide gels.

Industrial Applicability

The present invention is to provide an industrially useful electrophoresis apparatus and novel packing composition for separation and/or analysis for separation or analysis methods using the apparatus, and thus has industrial applicability.

A method for separation or analysis of proteins and nucleic acids is extremely useful not only for research and development, but also as the basic data for therapy or diagnosis, and the apparatus and method of the present invention contributes to collection of industrially useful data and has industrial applicability.

## Claims

1. A packing composition for electrophoretic separation and/or analysis, which comprises long-shaped self-assemblies that can be prepared by dissolving a low molecular weight amphiphilic compound having a hydrophobic moiety and a hydrophilic moiety in water under heating, and cooling the resulting solution.

2. The packing composition according to claim 1, wherein the electrophoresis method is capillary electrophoresis, capillary zone electrophoresis, capillary isoelectric focusing electrophoresis, capillary isotachphoresis, micellar electrokinetic chromatography, capillary gel electrophoresis, or SDS capillary gel electrophoresis.

3. The packing composition according to claim 1, wherein the electrophoresis method is slab electrophoresis, disc gel electrophoresis, SDS-PAGE, native-PAGE, isoelectric focusing electrophoresis (electrofocusing electrophoresis), or immunoelectrophoresis.

4. The packing composition according to claim 1, wherein a blotting operation is also used in combination with electrophoresis.

5. The packing composition according to any one of claims 1 to 4, wherein the object of analysis in electrophoresis is proteins, nucleic acids, saccharides, or lipids.

6. The packing composition according to any one of claims 1 to 5, wherein the long-shaped self-assemblies are in a hydrogel state formed by means of a physically crosslinked structure.

7. The packing composition according to claim 6, wherein the hydrogel contains a hydrogel agent selected from the group consisting of hydroxyethylcellulose, hydroxypropylcellulose, and polyacrylamide.

8. The packing composition according to any one of claims 1 to 7, wherein the low molecular weight compound having a hydrophobic moiety and a hydrophilic moiety is an amphiphilic lipid.

9. The packing composition according to claim 8, wherein the low molecular weight amphiphilic compound having a hydrophobic moiety and a hydrophilic moiety is a thymidylic acid bolaamphiphile.

10. A method of preparing a packing composition for electrophoretic separation and/or analysis containing long-shaped self-assemblies, which comprises mixing a low molecular weight amphiphilic compound having a hydrophobic moiety and a hydrophilic moiety with water, dissolving the mixture in water under heating, and then cooling the resulting solution.

11. The method of preparing a packing composition according to claim 10, wherein the long-shaped self-assemblies are in a hydrogel state formed of a physically crosslinked structure.

12. The method of preparing a packing composition according to claim 11, wherein the hydrogel contains a hydrogel agent selected from group consisting of hydroxyethylcellulose, hydroxypropylcellulose, and polyacrylamide.

13. A vessel for separation medium for electrophoresis which is packed with the packing composition according to any one of claims 1 to 9.

14. The vessel for separation medium according to claim 13, wherein the vessel for separation medium for electrophoresis is a capillary.

15. The vessel for separation medium according to claim 13 or 14, wherein the packing composition is replaceably packed.

**16.** An electrophoresis apparatus having the vessel for separation medium according to claim 13 or 14.

**17.** The electrophoresis apparatus according to claim 16, wherein the vessel for separation medium for electrophoresis is a capillary.

**18.** A method of separation and/or analysis of a sample by electrophoresis, by using a capillary for electrophoresis packed with the packing composition according to any one of claims 1 to 9.

**19.** The method of separation and/or analysis according to claim 18, wherein the electrophoresis method is capillary electrophoresis, capillary zone electrophoresis, capillary isoelectric focusing electrophoresis, capillary isotachophoresis, micellar electrokinetic chromatography, capillary gel electrophoresis, or SDS capillary gel electrophoresis.

**20.** The method of separation and/or analysis according to claim 18, wherein the electrophoresis method is slab electrophoresis, disc gel electrophoresis, SDS-PAGE, Native PAGE, isoelectric focusing electrophoresis (electrofocusing electrophoresis), or immunoelectrophoresis.

**21.** The method of separation and/or analysis according to claim 20, wherein a blotting operation is further used in combination with electrophoresis.

**22.** The method of separation and/or analysis according to any one of claims 18 to 21, wherein the sample used as an object of analysis is proteins, nucleic acids, saccharides or lipids.

**23.** A method of replacement of a packing composition for separation and/or analysis in a capillary, which comprises heating a capillary column packed with a deteriorated packing composition for separation and/or analysis in the capillary column; redissolving the packing composition for separation and/or analysis to a fluid sol state or a molecularly dispersed state; removing the deteriorated packing composition for separation and/or analysis which has been converted to a solution inside the capillary by suctioning or pressurizing the solution; and then packing a new packing composition for separation and/or analysis into the capillary column.

**24.** The method of replacement according to claim 22, wherein the packing composition for separation and/or analysis is the composition for separation and/or analysis according to any one of claims 1 to 9.

**25.** The method of replacement according to claim 23 or 24, wherein the temperature for heating the capillary column is 50°C to 100°C.

Fig. 1

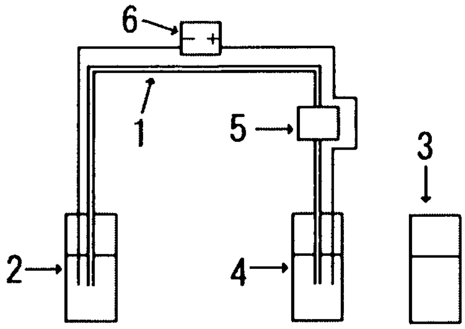


Fig. 2

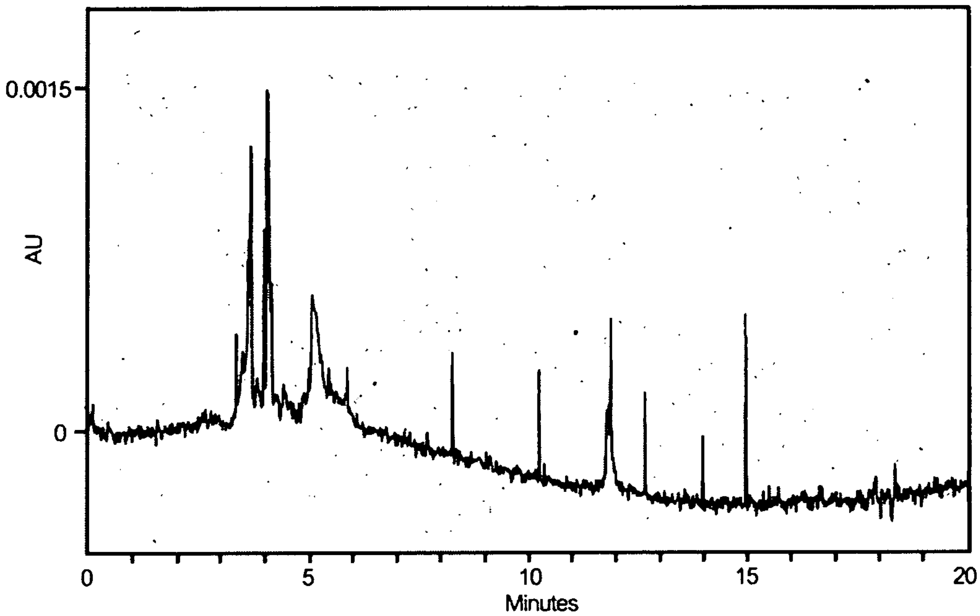


Fig. 3

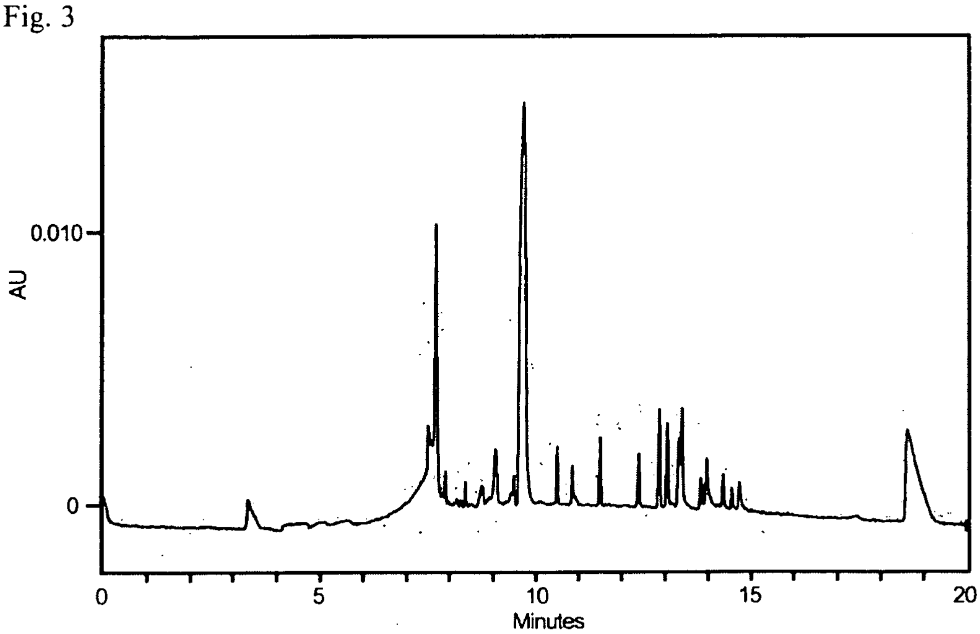

Fig. 4

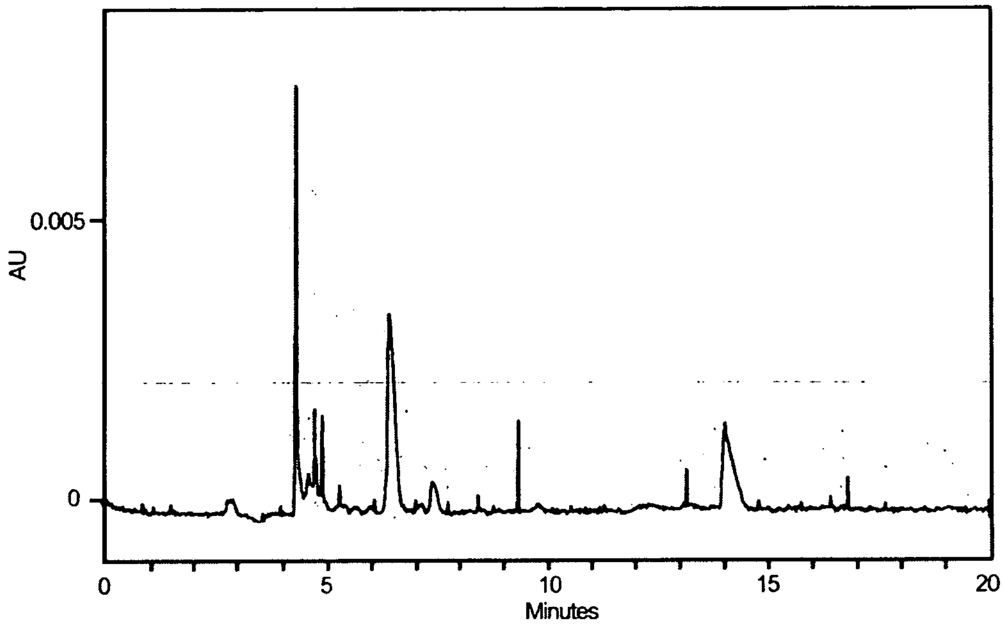


Fig. 5

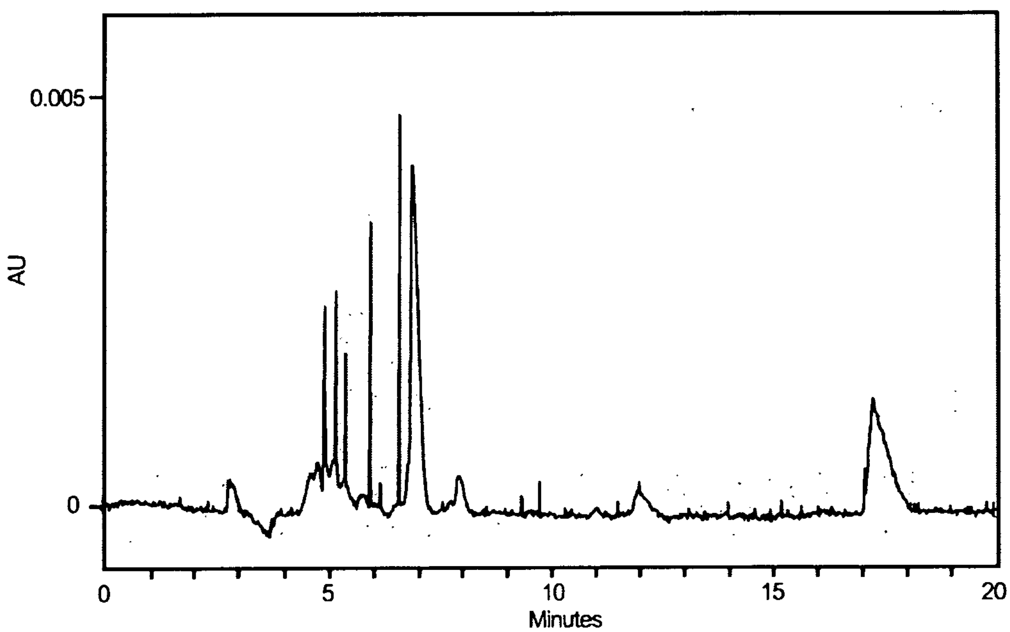

Fig. 6

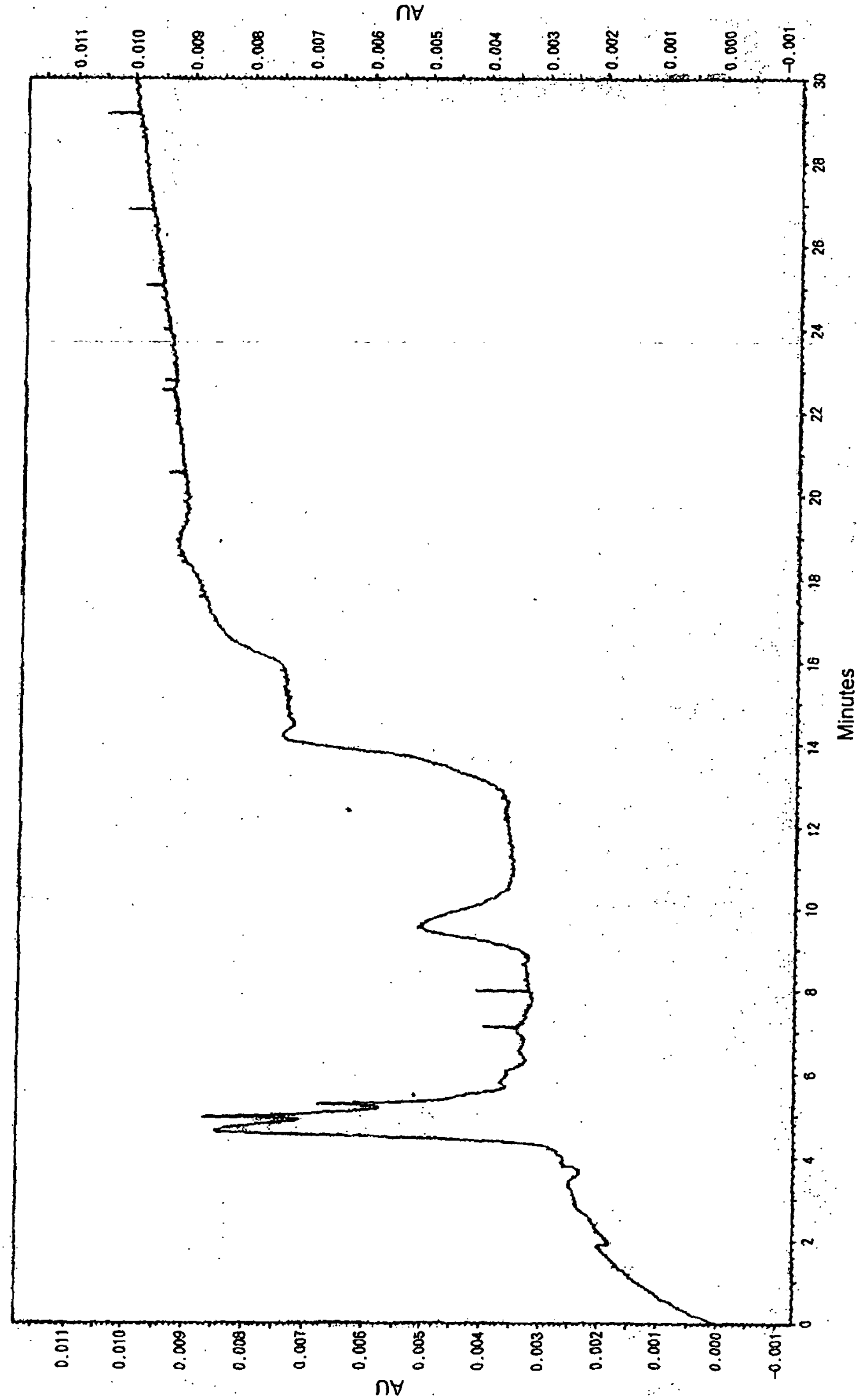

Fig. 7

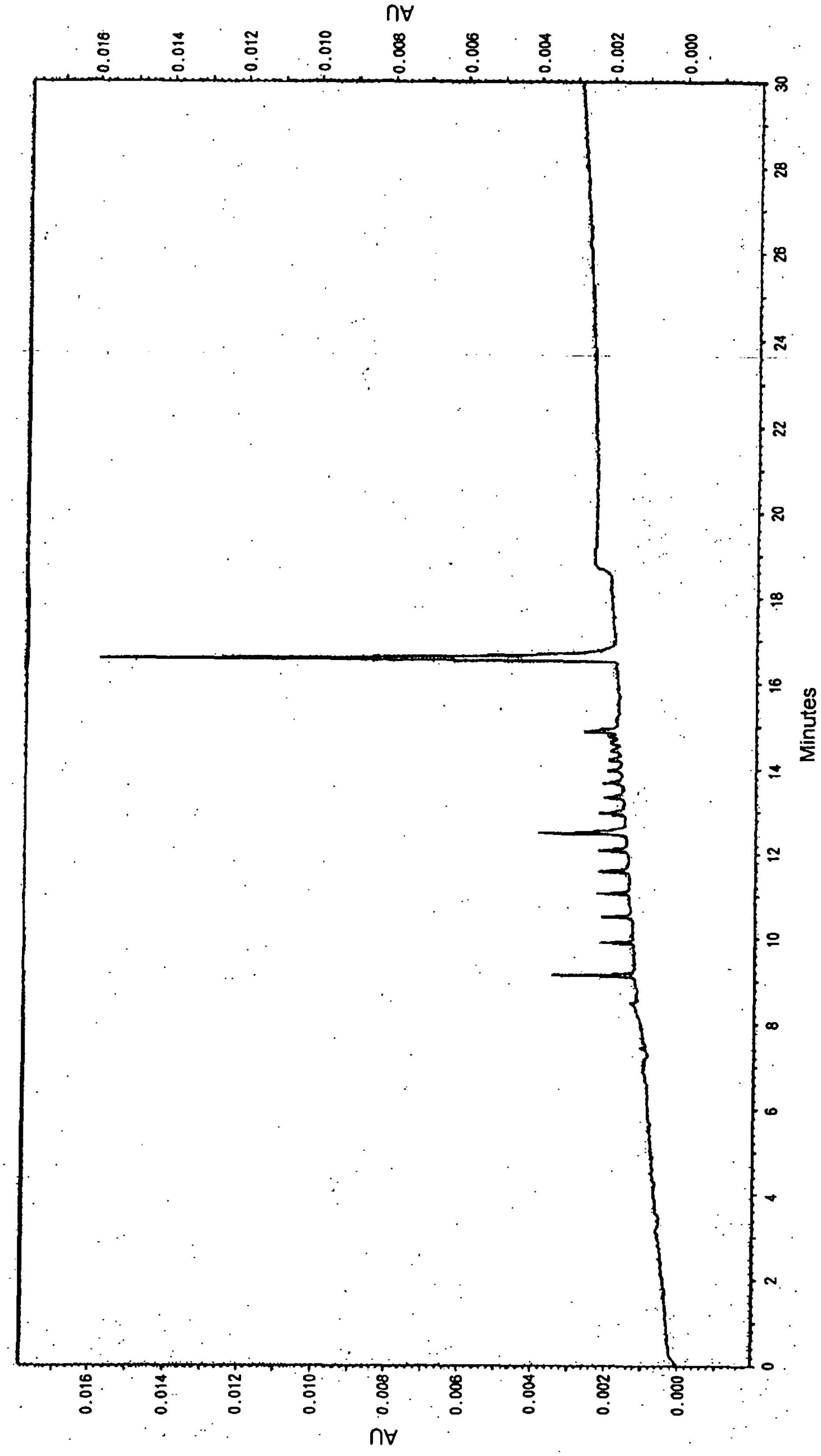
AU
0.016
0.014
0.012
0.010
0.008
0.006
0.004
0.002
0.000
Minutes
0
2
4
6
8
10
12
14
16
18
20
22
24
26
28
30

Fig. 8

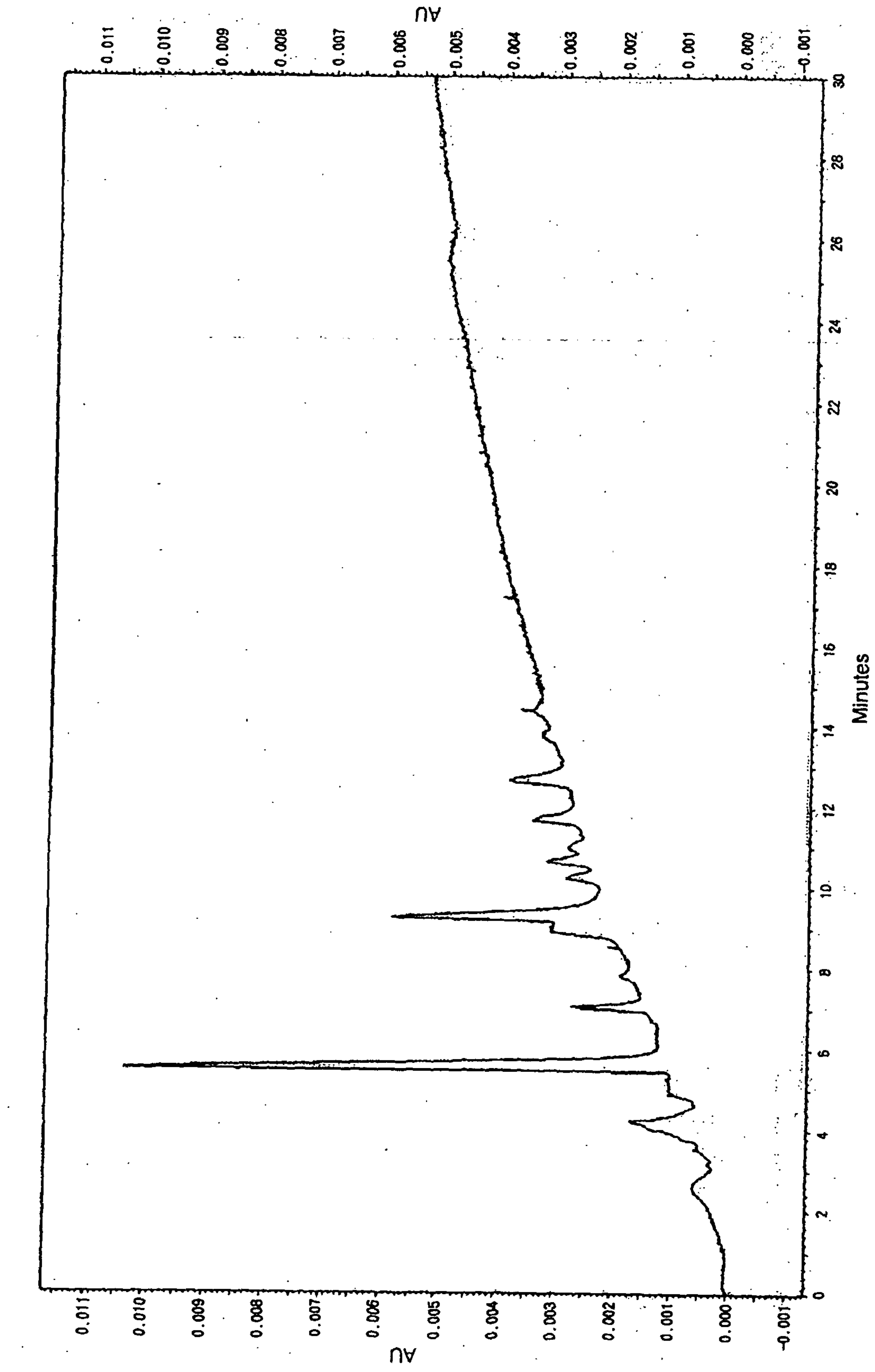
AU
Minutes
0.011
0.010
0.009
0.008
0.007
0.006
0.005
0.004
0.003
0.002
0.001
0.000
-0.001
0
2
4
6
8
10
12
14
16
18
20
22
24
26
28
30

Fig. 9

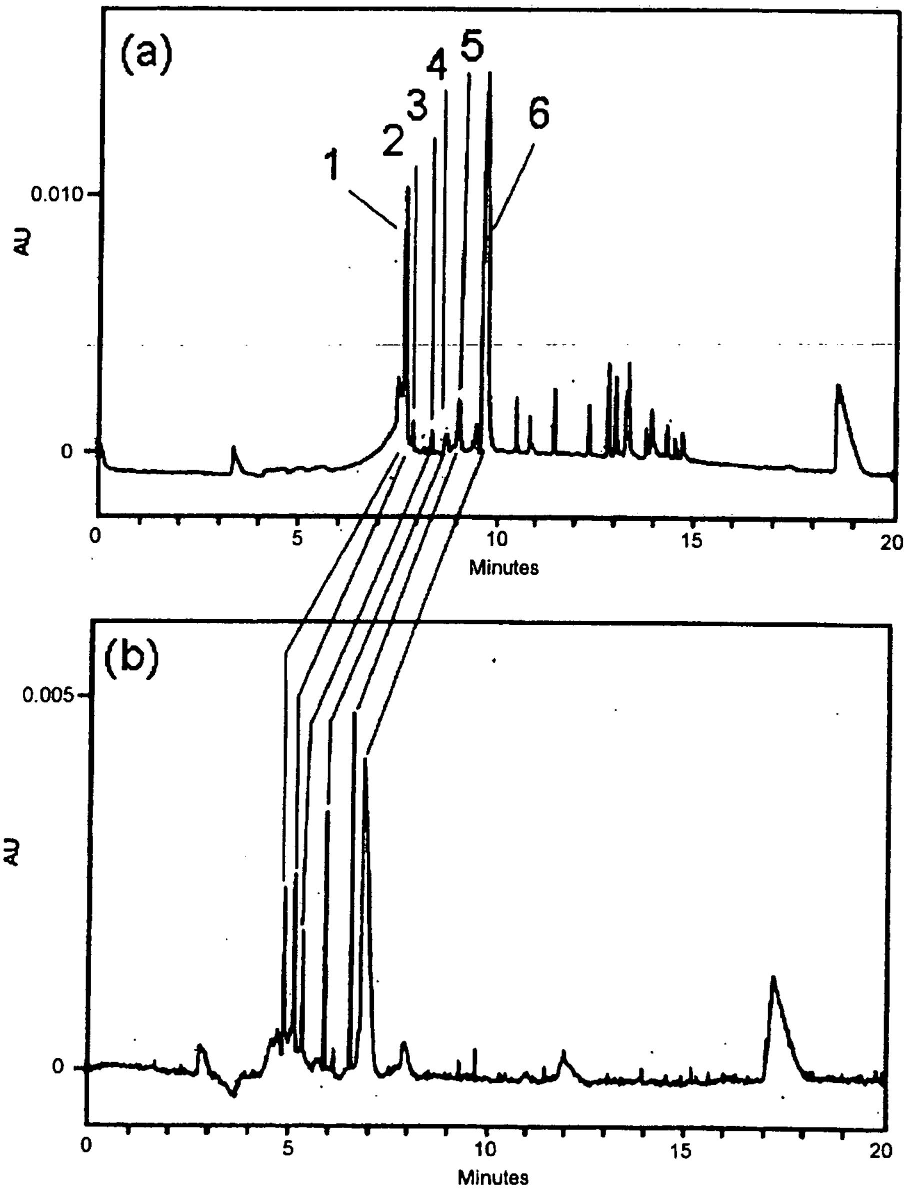
(a)
1
2
3
4
5
6
0.010
AU
0
0
5
10
15
20
Minutes
(b)
0.005
AU
0
0
5
10
15
20
Minutes

Fig. 10

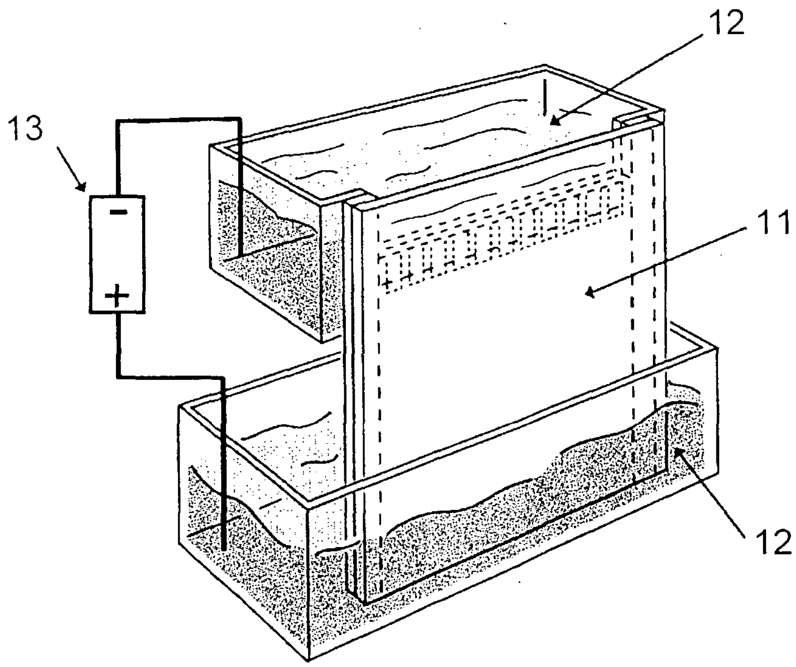


Fig. 11

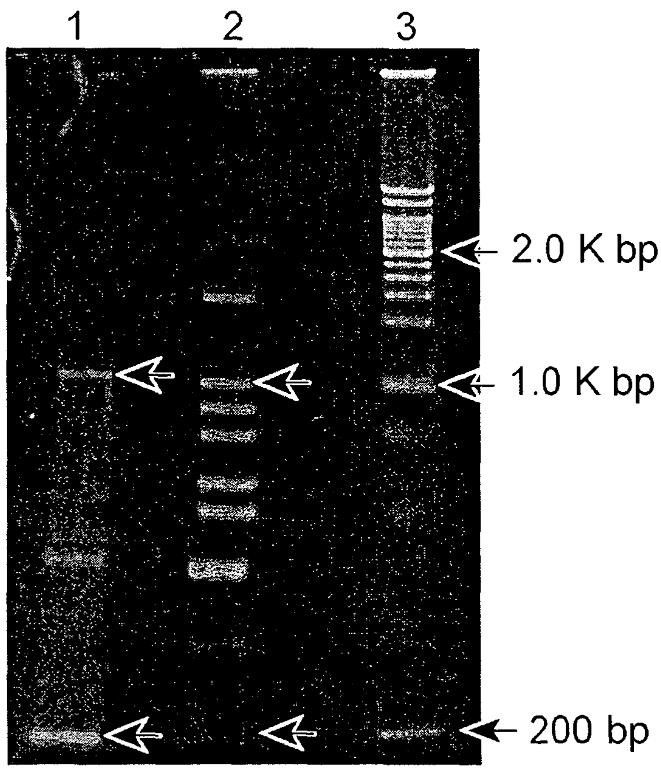

Fig. 12

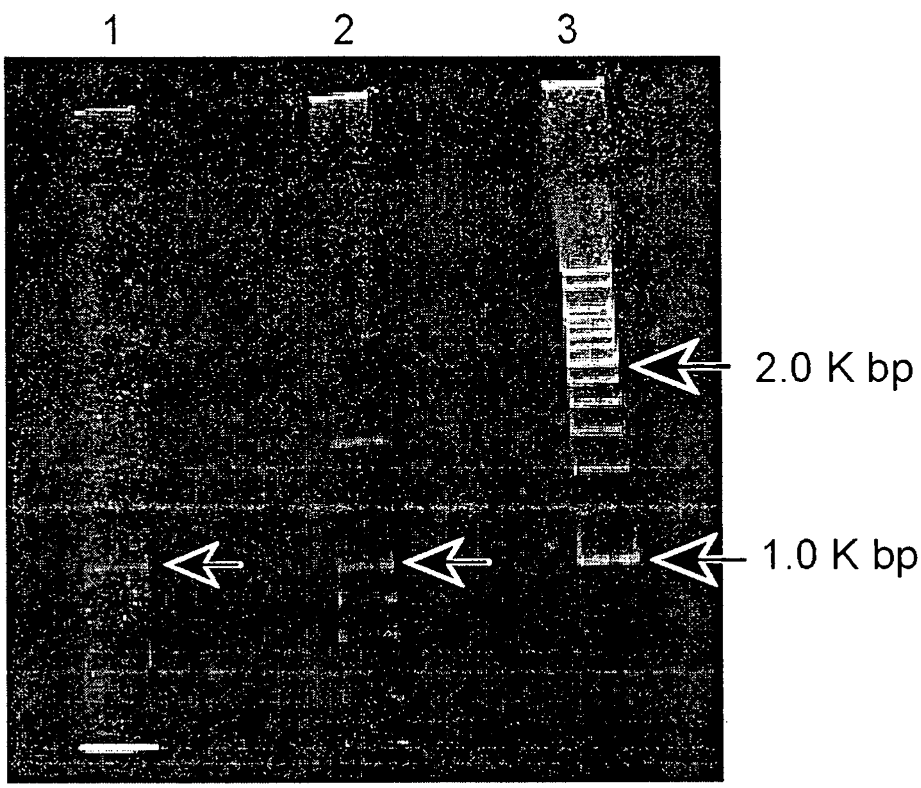

## INTERNATIONAL SEARCH REPORT

International application No.
PCT/JP2006/303385

A. CLASSIFICATION OF SUBJECT MATTER
*G01N27/447*(2006.01)

According to International Patent Classification (IPC) or to both national classification and IPC

B. FIELDS SEARCHED

Minimum documentation searched (classification system followed by classification symbols)
*G01N27/447*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 9-03295 A (Waters Corp.),<br>31 March, 1997 (31.03.97),<br>Page 17, lines 1 to 18; page 26, lines 28 to page 27, line 11; page 30, line 14 to page 32, line 27; Fig. 3<br>& WO 95/008529 A1 & US 006090250 A1<br>& EP 000721446 A | 1,2,8,10, 13-19<br>3-7,11,12, 20-22<br>9,23-25 |
| Y<br>A | JP 2002-323476 A (Wako Pure Chemical Industries, Ltd.),<br>08 November, 2002 (08.11.02),<br>Full text; all drawings<br>(Family: none) | 3-7,11,12, 20-22<br>9,23-25 |

☒ Further documents are listed in the continuation of Box C.  ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>29 May, 2006 (29.05.06) | Date of mailing of the international search report<br>20 June, 2006 (20.06.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/303385

C (Continuation). DOCUMENTS CONSIDERED TO BE RELEVANT

| Category* | Citation of document, with indication, where appropriate, of the relevant passages | Relevant to claim No. |
|---|---|---|
| Y<br><br>A | WO 2002/073157 A2 (PIERCE BIOTECHNOLOGY INC.), 19 September, 2002 (19.09.02),<br>Full text; all drawings<br>& EP 001368632 A & US 2004/0086909 A1 | 3-7,11,12, 20-22<br>9,23-25 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004224717 A
- JP 2001261693 A
- JP 2003252893 A
- JP 2003259893 A
- JP 2003049154 A
- JP 2002322190 A
- JP 2001261690 A
- JP 9143192 A
- JP 11255791 A
- JP 3012932 B
- JP 2003055642 A
- JP 2003039276 A


### Non-patent literature cited in the description


- *J. Chromatography,* 1991, vol. 558, 280
- Capillary Electrophoresis, Fundamentals and Practice. Kodansha Scientific, 1995
- **A. LAGU et al.** *Anal. Chem.,* 1991, vol. 63, 1233
- **A.E. BARRON et al.** *Anal. Chem.,* 2004, vol. 76, 5249
- **H.-T. CHANG et al.** *Anal. Chem.,* 2004, vol. 76, 192
- **O. LEV et al.** *Anal. Chem.,* 2004, vol. 76, 5399
- Liposome. Nankodou, 1988
- **L.A. ESTROFF ; A.D. HAMILTON.** *Chem. Rev.,* 2004, vol. 104, 1201
- Nanotechnology: Learning from the Basics. Tokyo Kagaku Dozin Co., Ltd, 2003
- **T. SHIMIZU et al.** *Langmuir,* 2005, vol. 21, 743-750
- **T. SHIMIZU et al.** *J. Am. Chem. Soc.,* 2002, vol. 124, 10675
- **T. SHIMIZU et al.** *Chem. Eur. J,* 2002, vol. 8, 160
- **S. SHINKAI et al.** *Org. Lett.,* 2002, vol. 4, 1423-1426
- **T. SHIMIZU et al.** *Langmuir,* 2004, vol. 20, 5969-5977
- **T. SHIMIZU et al.** *J. Am. Chem. Soc.,* 1997, vol. 119, 2812-2818
- **J.-H. FUHRHOP et al.** *J. Am. Chem. Soc.,* 1988, vol. 110, 2861-2867
- **FUHRHOP et al.** *J. Am. Chem. Soc.,* 1991, vol. 113, 7437-7439
- **D.F. O'BRIEN et al.** *J. Am. Chem. Soc.,* 1991, vol. 113, 7436-7437
- **D.F. O'BRIEN et al.** *J. Am. Chem. Soc.,* 1994, vol. 116, 10057-10069
- **J.-H. FUHRHOP et al.** *Langmuir,* 2001, vol. 17, 873-877
- **A.D. HAMILTON.** *Chem. Comm.,* 2003, 310-311
- **M.-P. KRAFFT et al.** *Chem. Eur. J,* 1996, vol. 2, 1335-1339
- **K. HANABUSA.** *Chem. Eur. J,* 2003, vol. 9, 348-354
- **T. SHIMIZU et al.** *Chem. Commun.,* 1988, 1791
- **R. IWAURA et al.** *Chem. Mater,* 2002, vol. 14, 3047
- **R.C. STEVENS.** *J. Am. Chem. Soc.,* 2001, vol. 123, 3205-3213
- **F.M. MENGER et al.** *J. Am. Chem. Soc.,* 2002, vol. 124, 12408-12409
- **I. HUC et al.** *Angew. Chem., Int. Ed,* 1998, vol. 37, 2689-2691
- **S. SHINKAI et al.** *Chem. Eur. J,* 1999, vol. 5, 2722-2728
- **I. HAMACHI et al.** *J. Am. Chem. Soc.,* 2002, vol. 124, 10954-10955
- **A.D. HAMILTON et al.** *Angew. Chem. Int. Ed,* 2000, vol. 39, 3448
- **T. SHIMIZU et al.** *Adv. Mater.,* 2001, vol. 13, 715-718
- **A. BLUME et al.** *Angew. Chem. Int. Ed.,* 2004, vol. 43, 245-247
- **A.D. HAMILTON et al.** *Chem. Commun.,* 2003, 2958-2959
- *Angew. Chem. Int. Ed,* 1994, vol. 33, 1514
- **M.-P. KRAFFT et al.** *Angew. Chem. Int. Ed.,* 1994, vol. 33, 1514
- **A.D. HAMILTON.** *Chem. Commun.,* 2003, 310-311
- **P. YAGER et al.** *Mol. Cryst. Liq. Cryst,* 1984, vol. 106, 371-381
- **J.M. SCHNUR.** *Science,* 1993, vol. 262, 1669-1676
- **B.L. FERINGA et al.** *J. Am. Chem. Soc.,* 2003, vol. 125, 14252-14253
- **Y. TALMON et al.** *Langmuir,* 2002, vol. 18, 7240-7244

• **I. HUC et al.** *Angew. Chem., Int. Ed.,* 1998, vol. 37, 2689-2691